# EUROPÄISCHE PATENTSCHRIFT

(11) **EP 2 454 705 B1**
(45) Veröffentlichungstag und Bekanntmachung des Hinweises auf die Patenterteilung: **06.09.2017**
(21) Anmeldenummer: 10736649.4
(22) Anmeldetag: 12.07.2010
(51) Int. Cl.: G06F 21/33, G06F 21/34, G06F 21/41, H04L 9/32, H04L 29/06

(54) **VERFAHREN ZUM LESEN VON ATTRIBUTEN AUS EINEM ID-TOKEN UND ONE-TIME PASSWORT GENERATOR**
METHOD TO READ ATTRIBUTES FROM AN ID-TOKEN AND ONE-TIME PASSWORT GENERATOR
PROCÉDÉ POUR LIRE LES ATTRIBUTS D'UN JETON D' IDENTIFICATION ET GÉNÉRATEUR DE MOT CLEFS A USAGE UNIQUE

(30) Priorität: 14.07.2009 DE 102009027686
(43) Veröffentlichungstag der Anmeldung: 23.05.2012
(60) Teilanmeldung: 17180350.5
(73) Patentinhaber: Bundesdruckerei GmbH, 10958 Berlin (DE)
(72) Erfinder: DIETRICH, Frank, 12437 Berlin (DE); FISCHER, Jörg, 13053 Berlin (DE); PAESCHKE, Manfred, 16348 Wandlitz (DE)
(74) Vertreter: Richardt Patentanwälte PartG mbB
(86) Internationale Anmeldenummer: PCT/EP2010/059973
(87) Internationale Veröffentlichungsnummer: WO 2011/006864

(56) Entgegenhaltungen:
- US-A1- 2001 045 451
- BSI: "Technische Richtlinie eID-Server" TECHNISCHE RICHTLINIE EID-SERVER, BUNDESAMT FÜR SICHERHEIT IN DER INFORMATIONSTECHNIK, BONN, Bd. BSI TR-03130, Nr. Version 1.0 RC1, 19. Mai 2009 (2009-05-19), Seiten 1-48, XP002598177
- WIKIPEDIA: "Security token" INTERNET CITATION, [Online] 8. Juli 2009 (2009-07-08), Seiten 1-9, XP007915097 Gefunden im Internet: URL:http://en.wikipedia.org/w/index.php?ti tle=Security_token&oldid=300920271> [gefunden am 2010-09-29]
- "Technical Guideline TR-03110 Advanced Security Mechanisms for Machine Readable Travel Documents . Extended Access Control (EAC)" INTERNET CITATION, [Online] 21. Februar 2008 (2008-02-21), Seiten 1-59, XP002565917 Gefunden im Internet: URL:https://www.bsi.bund.de/cae/servlet/co ntentblob/475682/publicationFil e/30616/TR-03110_v111_pdf.pdf> [gefunden am 2010-01-25]
- "Technische Richtlinie TR-03127 Architektur Elektronischer Personalausweis" TECHNISCHE RICHTLINIE TR-03127, BUNDESAMT FÜR SICHERHEIT IN DER INFORMATIONSTECHNIK, DE, Nr. Version 0.5, 17. April 2009 (2009-04-17), Seiten 1-37, XP007914804
- KAIN M ET AL: "SAML 2.0, ein Tutorium- Teil 1: Theorie"[Online] Bd. 5/2007, Seiten 55-59, XP002598178 Gefunden im Internet: URL:http://www.acando.de/Global/GER/fachar tikel_ger/kain_keller_JS_05_07.pdf> [gefunden am 2010-08-26]

## Beschreibung

Die Erfindung betrifft ein Verfahren zum Lesen von zumindest einem Attribut aus einem ID-Token, ein Computerprogrammprodukt, einen ID-Token sowie ein Computersystem.

Aus dem Stand der Technik sind verschiedene Verfahren zur Verwaltung der so genannten digitalen Identität eines Benutzers bekannt:

Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität manipulieren kann.

Bei OPENID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.

Aus US 2007/0294431 A1 ist ein weiteres Verfahren zur Verwaltung der digitalen Identitäten bekannt, welches ebenfalls eine Nutzerregistrierung erfordert.

Weitere Token-basierte Authentifizierungsverfahren sind in den zum Anmeldezeitpunkt unveröffentlichten Patentanmeldungen DE 10 2008 000 067.1-31, DE 10 2008 040 416.0-31, DE 10 2008 042 262.2-31 und DE 10 2009 026 953.3 derselben Patentanmelderin offenbart.

Der Erfindung liegt demgegenüber die Aufgabe zugrunde, ein verbessertes Verfahren zum Lesen zumindest eines Attributs zu schaffen, sowie ein entsprechendes Computerprogrammprodukt, einen ID-Token und ein Computersystem.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Nach Ausführungsformen der Erfindung wird ein Verfahren zum Lesen zumindest eines in einem ID-Token gespeicherten Attributs geschaffen, wobei der ID-Token einem Nutzer zugeordnet ist. Das Verfahren beinhaltet die folgenden Schritte: Authentifizierung des Nutzers gegenüber dem ID-Token; Authentifizierung eines ersten Computersystems gegenüber dem ID-Token; nach erfolgreicher Authentifizierung des Nutzers und des ersten Computersystems gegenüber dem ID-Token, Lesezugriff des ersten Computersystems auf das zumindest eine in dem ID-Token gespeicherte Attribut zur Übertragung des zumindest einen Attributs an ein zweites Computersystem. Hierdurch kann ein "Vertrauensanker" geschaffen werden. Ferner wird eine Zeitangabe von dem ersten Computersystem an den ID-Token zur Generierung eines Passworts mit Hilfe der Zeitangabe durch den ID-Token übertragen.

Ausführungsformen der Erfindung ermöglichen das Lesen eines oder mehrerer der in einem ID-Token gespeicherten Attribute durch das erste Computersystem, wobei die Verbindung zwischen dem ID-Token und dem ersten Computersystem über ein Netzwerk, insbesondere das Internet, aufgebaut werden kann. Bei dem zumindest einem Attribut kann es sich um eine Angabe bezüglich der Identität des dem ID-Token zugeordneten Nutzers handeln, insbesondere bezüglich dessen so genannter digitaler Identität. Beispielsweise werden durch das erste Computersystem die Attribute Name, Vorname, Adresse gelesen, um diese Attribute an ein zweites Computersystem, zum Beispiel eines Online-Dienstes, weiterzuleiten.

Es kann aber zum Beispiel auch nur ein einzelnes Attribut gelesen werden, welches nicht zur Feststellung der Identität des Nutzers, sondern beispielsweise zur Überprüfung der Berechtigung des Benutzers zur Inanspruchnahme eines bestimmten Online-Dienstes dient, wie zum Beispiel das Alter des Nutzers, wenn dieser einen Online-Dienst in Anspruch nehmen möchte, der einer bestimmten Altersgruppe vorbehalten ist, oder ein anderes Attribut, welches die Zugehörigkeit des Nutzers zu einer bestimmten Gruppe dokumentiert, welche zur Nutzung des Online-Dienstes berechtigt ist.

Bei dem ID-Token kann es sich um ein tragbares elektronisches Gerät, wie zum Beispiel einen so genannten USB-Stick, handeln oder um ein Dokument, insbesondere ein Wert- oder Sicherheitsdokument.

Unter einem "Dokument" werden erfindungsgemäß papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Ausführungsformen der Erfindung sind also besonders vorteilhaft, da das zumindest eine Attribut aus einem besonders vertrauenswürdigen Dokument, beispielsweise einem amtlichen Dokument, ausgelesen wird. Von besonderem Vorteil ist weiterhin, dass eine zentrale Speicherung der Attribute nicht erforderlich ist. Die Erfindung ermöglicht also ein besonders hohes Maß an Vertrauenswürdigkeit hinsichtlich der Mitteilung der zu einer digitalen Identität gehörenden Attribute, verbunden mit einem optimalen Datenschutz bei äußerst bequemer Handhabung.

Ausführungsformen der Erfindung sind besonders vorteilhaft, da die Generierung eines Passworts durch den ID-Token mit Hilfe der Zeitangabe erfolgen kann.

Unter einem "Passwort" wird hier insbesondere jede Kennung oder Transaktionsnummer verstanden, durch die der Nutzer Zugang zum Beispiel zu einem Online-Dienst erhalten kann. Bei dem Passwort kann es sich insbesondere um ein zeitbasiertes Einmal-Passwort handeln, was auch als Time-Based one-Time-Password oder Time-Synchronized one-Time-Password bezeichnet wird. Mit Hilfe der Zeitangabe, kann der ID-Token beispielsweise nach einem standardisierten Verfahren, wie zum Beispiel die Internet Engineering Task Force (IETF), Time-based one-Time Password Algorithmus (TOTP) ein solches zeitbasiertes Einmal-Passwort generieren.

Für den Fall, dass das Dokument über eine eigene Zeitbasis verfügt, kann die von dem ID-Token empfangene Zeitangabe zur Synchronisierung dieser Zeitbasis mit einer Zeitbasis zum Beispiel des ersten Computersystems verwendet werden.

Ganz besonders vorteilhaft sind Ausführungsformen der Erfindung für einen ID-Token, der über keine oder keine permanente eigene Energieversorgung verfügt. Beispielsweise hat der ID-Token keine Batterie, sondern die Versorgung des ID-Tokens mit Energie erfolgt extern durch ein Lesegerät, wie zum Beispiel das dritte Computersystem.

Insbesondere kann die Einkopplung der Energie in den ID-Token drahtlos erfolgen, wie zum Beispiel nach einem RFID- oder einem Near Field Communication (NFC)-Verfahren. Die Versorgung des ID-Tokens mit elektrischer Energie erfolgt in diesem Fall also nur so lange, wie sich der ID-Token in der Reichweite des Lesegeräts befindet. Der ID-Token kann einen Oszillator aufweisen, beispielsweise eine sogenannte Clock, der nur dann oszilliert, solange die Energieversorgung durch Einkopplung von dem Lesegerät zur Verfügung steht. Wenn beispielsweise der ID-Token in die Reichweite eines Lesegeräts gebracht wird und dann die Zeitangabe empfängt, wobei es sich bei der Zeitangabe um eine absolute Zeitangabe handelt, kann durch den ID-Token eine aktuelle absolute Zeitangabe genereriert werden, solange die Energieversorgung weiter fortbesteht, indem nämlich die empfangene absolute Zeitangabe mit Hilfe des Oszillators des ID-Tokens ständig oder in Zeitintervallen aktualisiert wird.

Nach Ausführungsformen der Erfindung wird das Passwort aus der empfangenen Zeitangabe generiert, wobei man davon ausgeht, dass diese Zeitangabe für ein bestimmtes Zeitintervall von zum Beispiel einigen Sekunden als die aktuelle Zeit betrachtet wird. Alternativ wird das Passwort aus der mit Hilfe des Oszillators des ID-Token aktualisierten Zeitangabe generiert.

Nach Ausführungsformen der Erfindung wird das von dem ID-Token generierte Passwort an das ersten Computersystem übertragen und von dem ersten Computersystem verifiziert. Hierzu kann beispielsweise wie folgt vorgegangen werden: Das erste Computersystem verfügt über eine Zeitbasis, die eine aktuelle Zeitangabe liefert. Zu einem bestimmten Zeitpunkt überträgt das erste Computersystem die aktuell von seiner Zeitbasis gelieferte Zeitangabe an den ID-Token. Ferner generiert das erste Computersystem mit Hilfe dieser aktuellen Zeitangabe ein Passwort mit Hilfe eines Passwort-Generierungs-Algorithmus. Auch der ID-Token generiert ein solches Passwort mit Hilfe der von dem ersten Computersystem empfangenen Zeitangabe, und zwar nach demselben Passwort-Generierungs-Algorithmus. Das von dem ID-Token generierte Passwort wird dann an das erste Computersystem übertragen. Das erste Computersystem kann das Passwort verifizieren, indem es das von dem ID-Token empfangene Passwort mit dem durch das erste Computersystem generierte Passwort vergleicht; wenn beide Passwörter übereinstimmen, so gilt der Nutzer als authentifiziert oder berechtigt, um beispielsweise einen Online-Dienst in Anspruch zu nehmen.

Nach einer Ausführungsform der Erfindung erfolgt die Übertragung des zumindest einen Attributs an das zweite Computersystem nur dann, wenn die Verifizierung des Passworts erfolgreich war. Eine solche Übertragung erübrigt sich nämlich dann, wenn die Verifizierung des Passworts fehlschlägt, sodass der Nutzer zum Beispiel den Online-Dienst des zweiten Computersystems nicht in Anspruch nehmen kann.

Nach einer Ausführungsform der Erfindung erfolgt zuerst die Verifizierung des Passworts und dann der Lesezugriff auf das zumindest eine Attribut, aber letzeres nur dann, wenn die Verifizierung des Passworts erfolgreich war.

Nach Ausführungsformen der Erfindung wird das Passwort an das zweite Computersystem übertragen und dort verifiziert. Beispielsweise verfügt das zweite Computersystem über eine Zeitbasis, die mit der Zeitbasis des ersten Computersystems synchron ist, sodass das zweite Computersystem aus der aktuellen Zeit mit Hilfe des Passwort-Generierungs-Algorithmus ebenfalls das Passwort generieren kann, um es so mit dem von dem ID-Token empfangenen Passwort für die Zwecke der Verifizierung zu vergleichen.

Nach einer Ausführungsform der Erfindung hat der ID-Token eine Anzeigevorrichtung. Beispielsweise ist der ID-Token kartenförmig ausgebildet, insbesondere als Chipkarte oder als elektronischer Personalausweis. In den Dokumentenkörper eines solchen Dokuments ist eine Anzeigevorrichtung integriert, wie zum Beispiel eine elektrophoretische, elektrochrome, elektrostatische, electro-wetting-, ferroelektrische, Flüssigkristall-, bistabile, semi-bistabile oder Drehelement-Anzeigevorrichtung. Die sichere Integration einer solchen Anzeigevorrichtung in ein Dokument ist beispielsweise an sich bekannt aus WO 2009/062853, WO 2009/062869, WO 2009/062860, WO 2009/062870, WO 2009/062861, WO 2009/062827, WO 2009/062892, WO 2009/062893, WO 2009/062788, WO 2009/062810, WO 2009/062855, WO 2009/053249, WO 2009/062832.

Nachdem das Passwort von dem ID-Token generiert worden ist, wird es auf der in den ID-Token integrierten Anzeigevorrichtung angezeigt, sodass der Nutzer das Passwort von der Anzeigevorrichtung ablesen kann. Der Nutzer kann dann das Passwort beispielsweise in das dritte Computersystem eingeben, sodass das dritte Computersystem das Passwort an das erste und/oder zweite Computersystem übertragen kann.

Nach Ausführungsformen der Erfindung handelt es sich bei dem dritten Computersystem, d.h. dem Nutzer-Computersystem, um einen Personalcomputer mit einem integrierten Lesegerät für den ID-Token, ein Mobilfunkgerät, wie zum Beispiel ein Smartphone, insbesondere mit einer RFID- oder NFC-Schnittstelle zur Kommunikation mit dem ID-Token, oder eine andere Electronic Appliance, die zur Kommunikation mit dem ID-Token und dem ersten Computersystem ausgebildet ist, wie zum Beispiel einen Personal Digital Assistant (PDA), eine digitale Kamera mit integrierter Mobilfunkschnittstelle oder dergleichen.

Nach einer Ausführungsform wird das Passwort von dem ID-Token beispielsweise über eine RFID- oder NFC-Schnittstelle zu dem dritten Computersystem übertragen und auf einer Anzeigevorrichtung, wie zum Beispiel ein Computer Monitor oder einen üblichen LCD- oder OLED-Anzeige angezeigt, sodass der Nutzer das Passwort von der Anzeigevorrichtung des dritten Computersystems ablesen kann. Der Nutzer kann dann das angezeigte Passwort zum Beispiel in das dritte Computersystem eingeben, sodass das Passwort an das erste und/oder das zweite Computersystem übertragen wird.

Nach einer Ausführungsform der Erfindung wird die Zeitangabe von dem ersten Computersystem signiert, bevor sie an den ID-Token übertragen wird. Der ID-Token kann dann die Gültigkeit der Signatur der Zeitangabe prüfen, was die Vertrauenswürdigkeit der Zeitangabe weiter erhöht.

Nach einer Ausführungsform der Erfindung wird eine Verbindung zwischen dem ID-Token und dem ersten Computersystem aufgebaut, die mit einer Ende-zu-Ende-Verschlüsselung geschützt ist. Über diese Verbindung mit Ende-zu-Ende-Verschlüsselung wird die Zeitangabe, vorzugsweise die signierte Zeitangabe, von dem ersten Computersystem an den ID-Token übertragen. Der nachfolgende Lesezugriff des ersten Computersystems auf das zumindest eine in dem ID-Token gespeicherte Attribut erfolgt über diese Verbindung nur dann, nachdem das erste Computersystem das Passwort empfangen und erfolgreich verifiziert hat. Die Verbindung mit der Ende-zu-Ende-Verschlüsselung wird beispielsweise über das dritte Computersystem und ein Netzwerk aufgebaut.

Nach einer Ausführungsform der Erfindung wird das von dem ID-Token generierte Passwort in einem nicht-flüchtigen Speicher des ID-Tokens gespeichert. Nachdem die Energieversorgung des ID-Tokens unterbrochen worden ist, beispielsweise indem der ID-Token von dem Lesegerät entfernt worden ist, bleibt das Passwort also in dem ID-Token gespeichert. Zusätzlich kann auch die Zeitangabe, mit Hilfe derer das Passwort generiert worden ist, in dem nicht-flüchtigen Speicher des ID-Tokens gespeichert werden. Alternativ oder zusätzlich speichert das erste Computersystem dieses Passwort ebenfalls, beispielsweise in einer Datenbank mit einer User-ID des Nutzers als Zugriffsschlüssel.
Bei einer nachfolgenden Verwendung des ID-Tokens wird dieser wieder in den Bereich des Lesegeräts gebracht. Das Passwort und die Zeitangabe werden dann an das erste Computersystem übertragen, sodass das erste Computersystem mit Hilfe des Passwort-Generierungs-Algorithmus prüfen kann, ob das Passwort zu der Zeitangabe passt. Alternativ oder zusätzlich kann das erste Computersystem auf seine Datenbank zugreifen, um zu prüfen, ob das von dem ID-Token empfangene Passwort das zuvor in der Datenbank für den betreffenden Nutzer abgespeicherte Passwort ist. Nur wenn dies der Fall ist, wird erneut eine aktuelle Zeitangabe von dem ersten Computersystem an den ID-Token für eine weitere Nutzung übertragen.

Nach einer Ausführungsform der Erfindung hat das erste Computersystem zumindest ein Zertifikat, welches zur Authentifizierung des ersten Computersystems gegenüber dem ID-Token verwendet wird. Das Zertifikat beinhaltet eine Angabe derjenigen Attribute, für welche das erste Computersystem eine Leseberechtigung hat. Der ID-Token prüft anhand dieses Zertifikats, ob das erste Computersystem die erforderliche Leseberechtigung für den Lesezugriff auf das Attribut hat, bevor ein solcher Lesezugriff durch das erste Computersystem durchgeführt werden kann.

Nach einer Ausführungsform der Erfindung sendet das erste Computersystem das zumindest eine von dem ID-Token ausgelesene Attribut unmittelbar an ein zweites Computersystem. Bei dem zweiten Computersystem kann es sich zum Beispiel um einen Server zur Erbringung eines Online-Dienstes oder eines sonstigen Dienstes, wie zum Beispiel einer Bankdienstleistung oder zur Bestellung eines Produkts handeln. Beispielsweise kann der Nutzer ein Konto online eröffnen, wozu Attribute, die die Identität des Nutzers beinhalten, von dem ersten Computersystem an das zweite Computersystem einer Bank übertragen werden.

Nach einer Ausführungsform der Erfindung erfolgt die Übertragung der aus dem ID-Token gelesenen Attribute von dem ersten Computersystem zunächst an ein drittes Computersystem des Nutzers. Beispielsweise hat das dritte Computersystem einen üblichen Internetbrowser, mit dem der Nutzer eine Webseite des zweiten Computersystems öffnen kann. Der Nutzer kann in die Webseite eine Anforderung oder Bestellung für einen Dienst oder ein Produkt eingeben.

Das zweite Computersystem spezifiziert daraufhin diejenigen Attribute, zum Beispiel des Nutzers oder seines ID-Tokens, welche es für die Erbringung des Dienstes oder die Annahme der Bestellung benötigt. Die entsprechende Attributspezifikation, die die Spezifizierung dieser Attribute beinhaltet, wird sodann von dem zweiten Computersystem an das erste Computersystem gesendet. Dies kann mit oder ohne Zwischenschaltung des dritten Computersystems erfolgen. Im letzteren Fall kann der Nutzer das gewünschte erste Computersystem gegenüber dem zweiten Computersystem spezifizieren, beispielsweise durch Eingabe der URL des ersten Computersystems in eine Webseite des zweiten Computersystems von dem dritten Computersystem aus.

Nach einer Ausführungsform der Erfindung beinhaltet die Dienst-Anforderung des Nutzers an das zweite Computersystem die Angabe eines Identifikators, wobei der Identifikator das erste Computersystem identifiziert. Beispielsweise handelt es sich bei dem Identifikator um einen Link, beispielsweise eine URL des ersten Computersystems.

Nach einer Ausführungsform der Erfindung wird die Attributspezifizierung nicht unmittelbar von dem zweiten Computersystem an das erste Computersystem gesendet, sondern zunächst von dem zweiten Computersystem an das dritte Computersystem. Das dritte Computersystem hat mehrere vordefinierte Konfigurationsdatensätze, wobei der dritte Computer mehrere vordefinierte Konfigurationsdatensätze aufweist, wobei jeder der Konfigurationsdatensätze eine Teilmenge der Attribute, zumindest eine Datenquelle und ein erstes Computersystem aus einer Menge von ersten Computersystemen spezifiziert, wobei die Attributspezifikation von dem zweiten Computersystem zunächst an das dritte Computersystem übertragen wird, sodass mittels des dritten Computersystems zumindest einer der Konfigurationsdatensätze auswählt wird, der eine Teilmenge der Attribute spezifiziert, welche das zumindest eine in der Attributspezifikation spezifizierte Attribut beinhaltet, und wobei der dritte Computer die Attributspezifikation an das erste Computersystem weiterleitet, und die Verbindung mit dem durch die Angabe der Datenquelle in dem ausgewählten Konfigurationsdatensatz spezifizierten ID-Token aufgebaut wird.

Nach einer Ausführungsform der Erfindung werden die aus dem ID-Token ausgelesenen Attribute von dem ersten Computersystem signiert und dann an das dritte Computersystem übertragen. Der Nutzer des dritten Computersystems kann die Attribute also lesen, ohne sie jedoch verändern zu können. Erst nach Freigabe durch den Nutzer werden die Attribute von dem dritten Computersystem an das zweite Computersystem weitergeleitet.

Nach einer Ausführungsform der Erfindung kann der Nutzer die Attribute vor deren Weiterleitung durch weitere Daten ergänzen.

Nach einer Ausführungsform der Erfindung hat das erste Computersystem mehrere Zertifikate mit verschiedenen Leserechten. Aufgrund des Empfangs der Attributspezifikation wählt das erste Computersystem eines oder mehrere dieser Zertifikate aus, um die entsprechenden Attribute aus dem ID-Token oder mehreren verschiedenen ID-Token auszulesen.

Nach einer Ausführungsform der Erfindung hat das dritte Computersystem zumindest einen Konfigurationsdatensatz, welcher eine externe Datenquelle zur Abfrage eines weiteren Attributs von dem dritten Computersystem über das Netzwerk spezifiziert.

Nach einer Ausführungsform der Erfindung erfolgt die Abfrage des weiteren Attributs, nachdem das zumindest eine Attribut aus dem ID-Token ausgelesen worden ist, und nachdem das dritte Computersystem das zumindest eine Attribut von dem ersten Computersystem empfangen hat, wobei die Abfrage das zumindest eine Attribut beinhaltet.

In einem weiteren Aspekt betrifft die Erfindung ein Computerprogrammprodukt, insbesondere ein digitales Speichermedium, mit ausführbaren Programminstruktionen zur Durchführung eines erfindungsgemäßen Verfahrens.
In einem weiteren Aspekt betrifft die Erfindung einen ID-Token mit einem geschützten Speicherbereich zur Speicherung von zumindest einem Attribut, mit Mitteln zur Authentifizierung eines dem ID-Token zugeordneten Nutzers gegenüber dem ID-Token, Mitteln zur Authentifizierung eines ersten Computersystems gegenüber dem ID-Token, Mitteln zum Aufbau einer geschützten Verbindung zu dem ersten Computersystem, über die das erste Computersystem das zumindest eine Attribut auslesen kann, wobei eine notwendige Voraussetzung für das Auslesen des zumindest einen Attributs aus dem ID-Token durch das erste Computersystem die erfolgreiche Authentifizierung des Nutzers und des ersten Computersystems gegenüber dem ID-Token ist. Der ID-Token hat ferner Mittel zum Empfang einer Zeitangabe von dem ersten Computersystem und Mittel zur Generierung eines Passworts mit Hilfe der Zeitangabe.

Nach einer Ausführungsform der Erfindung hat der ID-Token eine Schnittstelle, über die der ID-Token, zum Beispiel von einem Lesegerät, insbesondere dem dritten Computersystem, mit Energie versorgbar ist. Beispielsweise wird über die Schnittstelle die Energie elektromagnetisch eingekoppelt. Insbesondere kann es sich bei der Schnittstelle um eine RFID-Schnittstelle oder um eine NFC-Schnittstelle handeln. Die Schnittstelle kann gleichzeitig als Kommunikations-Schnittstelle dienen, über die der ID-Token die Zeitangabe empfangen kann.

Nach einer Ausführungsform der Erfindung hat der ID-Token einen Oszillator, der nur dann oszilliert, wenn der ID-Token über die Schnittstelle mit Energie versorgt wird. Der ID-Token verfügt über Mittel zur Bildung einer aktuellen Zeitangabe aus der empfangenen Zeitangabe mit Hilfe seines Oszillators. Die Mittel zur Generierung des Passworts sind dann so ausgebildet, dass die Generierung des Passworts mit Hilfe der aktuellen Zeitangabe erfolgt.

Auf diese Art und Weise verfügt also der ID-Token über eine aktuelle Zeitangabe, solange er mit Energie über die Schnittstelle versorgt wird, nachdem der ID-Token die Zeitangabe über die Schnittstelle empfangen hat, auch dann, wenn der ID-Token über keine permanente eigene Energieversorgung verfügt. Beispielsweise hat der ID-Token keinen oder nur einen kleinen Speicher zur Speicherung elektrischer Energie.

Nach einer weiteren Ausführungsform der Erfindung hat der ID-Token einen nicht-flüchtigen Speicher zur Speicherung des Passworts. Das Passwort wird also nach seiner Generierung in den nicht-flüchtigen Speicher abgespeichert. Wird die Energieversorgung unterbrochen, so bleibt das Passwort dort gespeichert. Wenn für eine nachfolgende Benutzung des ID-Tokens wieder elektrische Energie eingekoppelt wird, so wird das Passwort aus dem nicht-flüchtigen Speicher ausgelesen und beispielsweise als weitere Voraussetzung für die nochmalige Inanspruchnahme des ersten Computersystems oder eines von dem zweiten Computersystem angebotenen Online-Dienstes erneut zu dem ersten und/oder dem zweiten Computersystem übertragen. Durch die Speicherung des Passworts und die Notwendigkeit der Übertragung des Passworts an das erste und/oder zweite Computersystem als zusätzliche Voraussetzung zur Generierung eines weiteren Passworts wird ein zusätzlicher Fälschungsschutz geschaffen, insbesondere gegen die Herstellung einer Kopie des ID-Tokens, da der Inhalt des geschützten Speicherbereichs nicht ausgelesen werden kann.

Alternativ wird das Passwort auf einem bistabilen Display des ID-Tokens angezeigt, und temporär in einem flüchtigen Speicher des ID-Tokens gespeichert. Nach Beendigung der Energieversorgung wird der Inhalt des flüchtigen Speichers gelöscht, wobei das Passwort aber weiterhin auf dem bistabilen Display angezeigt wird, so dass es ein Nutzer von dort ablesen kann. Auch bei dieser Ausführungsform ist es also nicht möglich, dass Passwort auf elektronischem Wege aus dem ID-Token auszulesen, insbesondere auch nicht über dessen drahtlose Schnittstelle.

Zusätzlich zu der Authentifizierung des ersten Computersystems gegenüber dem ID-Token, wie sie an sich zum Beispiel als so genannte Extended Access Control für maschinenlesbare Reisedokumente (machine-readable travel documents - MRTD) bekannt und von der internationalen Luftfahrtbehörde ICAO spezifiziert ist, muss sich also der Nutzer gegenüber dem ID-Token authentifizieren. Beispielsweise wird durch eine erfolgreiche Authentifizierung des Nutzers gegenüber dem ID-Token dieser freigeschaltet, sodass die weiteren Schritte, nämlich die Authentifizierung des ersten Computersystems gegenüber dem ID-Token und/oder der Aufbau einer geschützten Verbindung zum Auslesen der Attribute, ablaufen können.

Nach einer Ausführungsform der Erfindung hat der ID-Token Mittel für eine Ende-zu-Ende-Verschlüsselung. Dies ermöglicht es, die Verbindung zwischen dem ID-Token und dem ersten Computersystem über ein drittes Computersystem des Nutzers aufzubauen, da der Nutzer aufgrund der Ende-zu-Ende-Verschlüsselung keine Änderungen der über die Verbindung übertragenen Daten vornehmen kann.

Nach einer Ausführungsform der Erfindung sind die Mittel zum Empfang der Zeitangabe von dem ersten Computersystem des ID-Tokens so ausgebildet, dass der Empfang der Zeitangabe über die mit Ende-zu-Ende-Verschlüsselung geschützte Verbindung erfolgt. Vorzugsweise ist die Zeitangabe ferner signiert.

Nach einer Ausführungsform der Erfindung erfolgt die Übertragung des Passworts von dem ID-Token an das erste Computersystem ebenfalls über diese mit Ende-zu-Ende-Verschlüsselung gesicherte Verbindung. Dies kann automatisch ohne Involvierung des Nutzers erfolgen.

Nach einer Ausführungsform der Erfindung hat der ID-Token eine Anzeigevorrichtung und Mittel zur Anzeige des Passworts auf der Anzeigevorrichtung. Der Nutzer kann beispielsweise das Passwort von der Anzeigevorrichtung ablesen und dann zum Beispiel in das dritte Computersystem eingeben.

In einem weiteren Aspekt betrifft die Erfindung ein erstes Computersystem mit Computersystem mit Mitteln zum Empfang einer Attributspezifikation über ein Netzwerk, wobei die Attributspezifikation zumindest ein Attribut spezifiziert, Mitteln zur Authentifizierung gegenüber einem ID-Token, Mitteln zum Lesen zumindest einen Attributs aus dem ID-Token über eine gesicherte Verbindung, wobei das Lesen des zumindest einen Attributs voraussetzt, dass sich ein dem ID-Token zugeordneter Nutzer gegenüber dem ID-Token authentifiziert hat, und mit Mitteln zum Senden einer Zeitangabe an den ID-Token.

Nach einer Ausführungsform der Erfindung kann das erste Computersystem Mittel zur Generierung einer Aufforderung an den Benutzer beinhalten. Nachdem das erste Computersystem die Attributspezifikation beispielsweise von dem zweiten Computersystem empfangen hat, sendet es daraufhin eine Aufforderung an das dritte Computersystem des Nutzers, sodass der Nutzer dazu aufgefordert wird, sich gegenüber dem ID-Token zu authentifizieren. Nachdem die Authentifizierung des Nutzers gegenüber dem ID-Token erfolgreich durchgeführt worden ist, erhält das erste Computersystem von dem dritten Computersystem eine Bestätigung. Daraufhin authentifiziert sich das erste Computersystem gegenüber dem ID-Token und es wird eine sichere Verbindung zwischen dem ID-Token und dem ersten Computersystem mit einer Ende-zu-Ende-Verschlüsselung aufgebaut.

Nach einer Ausführungsform der Erfindung hat das erste Computersystem mehrere Zertifikate, die jeweils unterschiedliche Leserechte spezifizieren. Nach Empfang der Attributspezifikation wählt das erste Computersystem zumindest eines dieser Zertifikate mit den zum Lesen der spezifizierten Attribute ausreichenden Leserechten.

Ausführungsformen des erfindungsgemäßen ersten Computersystems sind besonders vorteilhaft, da sie in Kombination mit der Notwendigkeit der Authentifizierung des Nutzers gegenüber dem ID-Token einen Vertrauensanker für die unverfälschte digitale Identität des Nutzers bilden. Hierbei ist von besonderem Vorteil, dass dies keine vorherige Registrierung des Nutzers gegenüber dem Computersystem erfordert sowie auch keine zentrale Speicherung der die digitalen Identitäten bildenden Attribute der Nutzer.

Nach einer Ausführungsform der Erfindung empfängt das erste Computersystem zusammen mit der Attributspezifikation einen Identifikator des zweiten Computersystems. Mit Hilfe des Identifikators identifiziert das Computersystem das zweite Computersystem, welches die Identifikationsdienste in Anspruch nehmen möchte, um diese Dienstleistung gegenüber dem zweiten Computersystem zu vergebühren.

Nach einer Ausführungsform der Erfindung handelt es sich bei dem Computersystem um ein behördlich zertifiziertes Trust-Center, insbesondere ein Signaturgesetzkonformes Trust-Center.

Im Weiteren werden Ausführungsformen der Erfindung mit Bezugnahme auf die Zeichnungen näher erläutert. Es zeigen:
- Figur 1: ein Blockdiagramm einer ersten Ausführungsform erfindungsgemäßer Computersysteme und eines erfindungsgemäßen ID-Tokens,
- Figur 2: ein Flussdiagramm einer Ausführungsform eines erfindungsgemäßen Verfahrens,
- Figur 3: ein Blockdiagramm weiterer Ausführungsformen erfindungsgemäßer Computersysteme,
- Figur 4: ein UML-Diagramm einer weiteren Ausführungsform eines erfindungsgemäßen Verfahrens,
- Figur 5: ein Blockdiagramm einer weiteren Ausführungsform erfindungsgemäßer Computersysteme und eines erfindungsgemäßen ID-Tokens,
- Figur 6: ein Blockdiagramm einer weiteren Ausführungsform erfindungsgemäßer Computersysteme und eines erfindungsgemäßen ID-Tokens.

Elemente der nachfolgenden Ausführungsformen, die einander entsprechen, werden mit denselben Bezugszeichen gekennzeichnet.

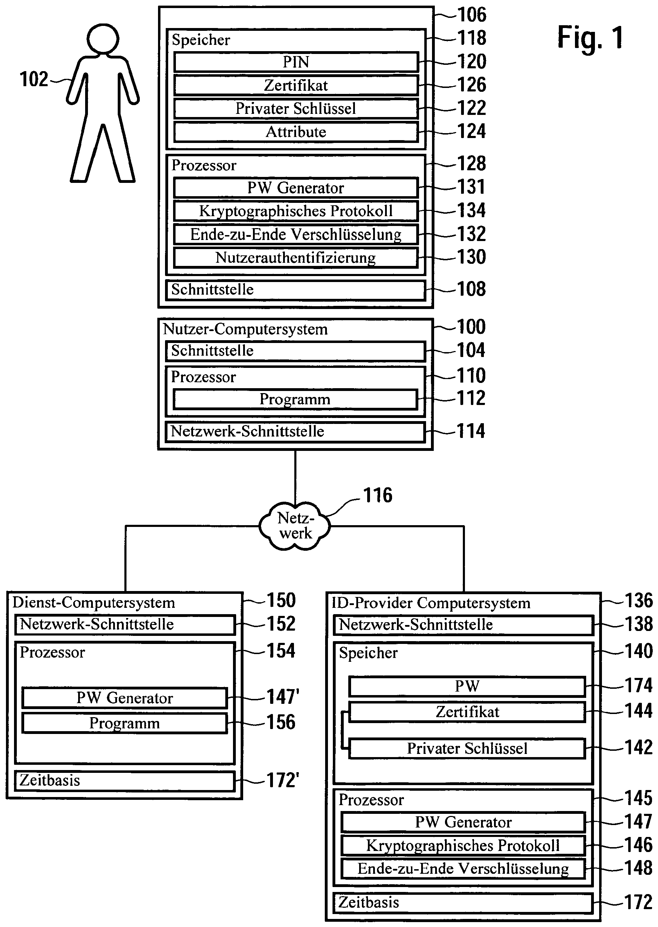

Die Figur 1 zeigt ein Nutzer-Computersystem 100 eines Nutzers 102. Bei dem Nutzer-Computersystem 100 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, oder dergleichen handeln. Das Nutzer-Computersystem 100 hat eine Schnittstelle 104 zur Kommunikation mit einem ID-Token 106, der eine entsprechende Schnittstelle 108 aufweist. Die Schnittstellen 104 und 108 können ferner auch zur Einkopplung von Energie in den ID-Token 106 dienen; insbesondere können die Schnittstellen 104 und 108 als RFID- oder als NFC-Schnittstelle ausgebildet sein.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung in den ID-Token 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines ID-Provider-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d.h. auch der ID-Token 106 muss sich dann gegenüber dem ID-Provider-Computersystem 136 nach demselben oder einem anderen kryptographischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird.

Alternativ zu der in der Figur 1 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen so genannten Klasse 2-Chipkarten-Terminal, kann auch die Eingabe der PIN erfolgen.

Der Prozessor 128 dient ferner zur Ausführung von Programminstruktionen 131. Durch die Programminstruktionen 131 wird ein Passwort-Generierungs-Algorithmus implementiert. Insbesondere dienen die Programminstruktionen 131 dazu, mit Hilfe einer über die Schnittstelle 108 empfangenen Zeitangabe ein Passwort zu generieren, insbesondere ein sogenanntes Einmal-Passwort.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert ist. Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Der Prozessor 145 dient ferner zur Ausführung von Programminstruktionen 147, die denselben Passwort-Generierungs-Algorithmus wie die Programminstruktionen 131 implementieren. Ferner verfügt das ID-Provider-Computersystem 136 über eine Zeitbasis 172, die zum Beispiel eine absolute Zeitangabe ausgibt. Bei der absoluten Zeitangabe kann es sich um die aktuelle Uhrzeit oder ein anderes Zeitformat handeln, wie zum Beispiel das UNIX-Zeitformat, d.h. die Angabe der Sekunden, die seit dem 01. Januar 1970 vergangen sind.

Die Zeitbasis 172 kann insbesondere so ausgebildet sein, dass sie nur innerhalb vorgegebener Zeitintervalle eine aktuelle Zeitangabe ausgibt, die dann während des betreffenden Zeitintervalls konstant bleibt. Das Zeitintervall kann zum Beispiel eine Länge von einigen Sekunden, wie zum Beispiel 5 - 15 Sekunden, aufweisen. Am Anfang eines Zeitintervalls wird von der Zeitbasis 172 dann eine aktuelle Zeitangabe ausgegeben, die für die Zeitdauer des Zeitintervalls konstant bleibt. Das Dienst-Computersystem 150 kann über eine prinzipiell gleich aufgebaute Zeitbasis 172' verfügen, die zu der Zeitbasis 172 synchron ist und innerhalb derselben Zeitintervalle jeweils eine aktuelle Zeitangabe ausgibt. Ferner kann der Prozessor 154 des Dienst-Computersystems 150 zur Ausführung von Programminstruktionen 147' dienen, die ebenfalls denselben Passwort-Generierungs-Algorithmus wie die Programminstruktionen 131 und 147 implementieren.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Das Dienst-Computersystem 150 kann zur Entgegennahme einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Benutzer 102 beispielsweise online ein Mobiltelefon oder dergleichen erwerben kann. Ferner kann das Dienst-Computersystem 150 auch zur Lieferung von digitalen Inhalten ausgebildet sein, beispielsweise für den Download von Musik- und/oder Videodaten.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seinen Auftrag oder seine Bestellung eingeben kann.

Je nach der Art des beauftragten oder bestellten Produkts oder der Dienstleistung muss das Dienst-Computersystem 150 ein oder mehrere Attribute des Nutzers 102 und/oder dessen ID-Token 106 anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt. Eine zusätzlich Voraussetzung kann der Empfang eines korrekten Passworts von dem Nutzer 102 bzw. dessen ID-Token 106 sein.

Beispielsweise ist es für die Eröffnung eines Bankkontos oder den Kauf eines Mobiltelefons mit einem dazugehörigen Vertrag erforderlich, dass der Nutzer 102 seine Identität gegenüber dem Dienst-Computersystem 150 offenbart, und dass diese Identität überprüft wird. Im Stand der Technik muss der Nutzer 102 hierzu beispielsweise seinen Personalausweis vorlegen. Dieser Vorgang wird durch das Auslesen der digitalen Identität des Nutzers 102 aus seinem ID-Token 106 ersetzt.

Je nach Anwendungsfall muss der Nutzer 102 aber nicht seine Identität gegenüber dem Dienst-Computersystem 150 offenbaren, sondern es reicht die Mitteilung, zum Beispiel nur eines der Attribute aus. Beispielsweise kann der Nutzer 102 über eines der Attribute einen Nachweis erbringen, dass er zu einer bestimmten Personengruppe gehört, die zugangsberechtigt für auf dem Dienst-Computersystem 150 zum Download bereitgehaltener Daten ist. Beispielsweise kann ein solches Kriterium ein Mindestalter des Nutzers 102 sein oder die Zugehörigkeit des Nutzers 102 zu einem Personenkreis, der auf bestimmte vertrauliche Daten eine Zugriffsberechtigung hat.

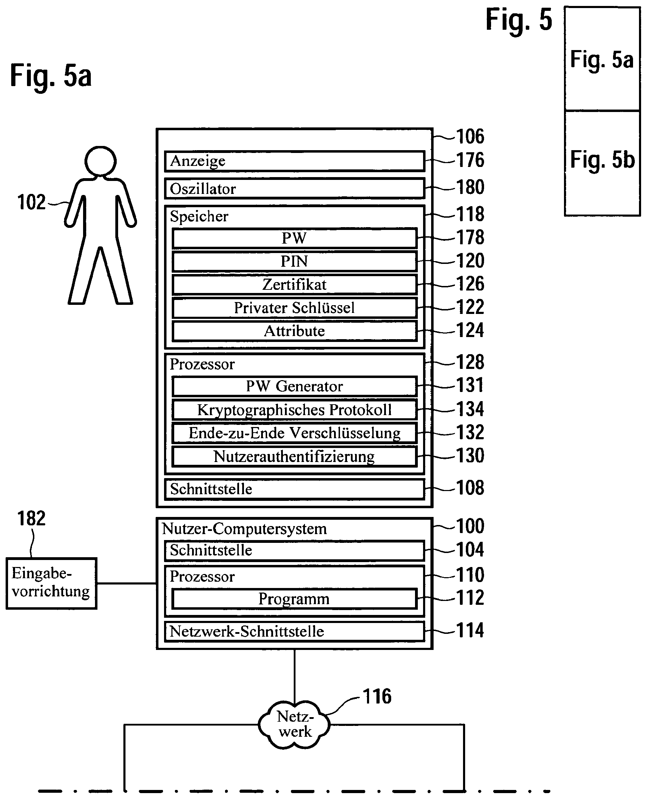

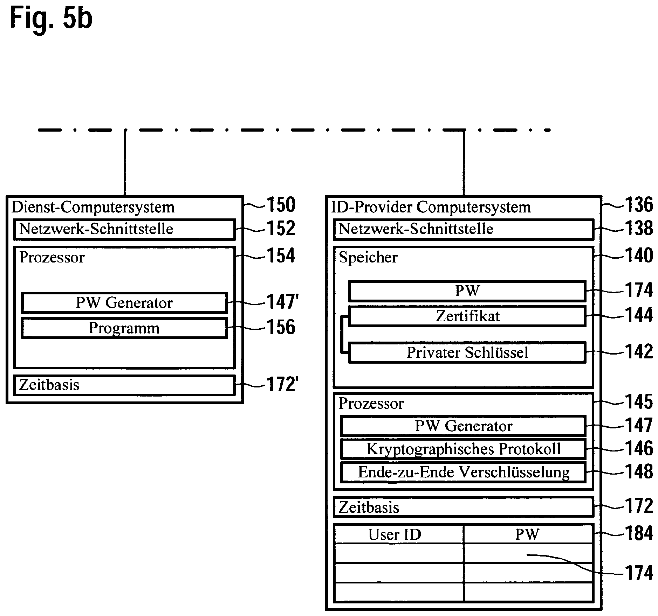

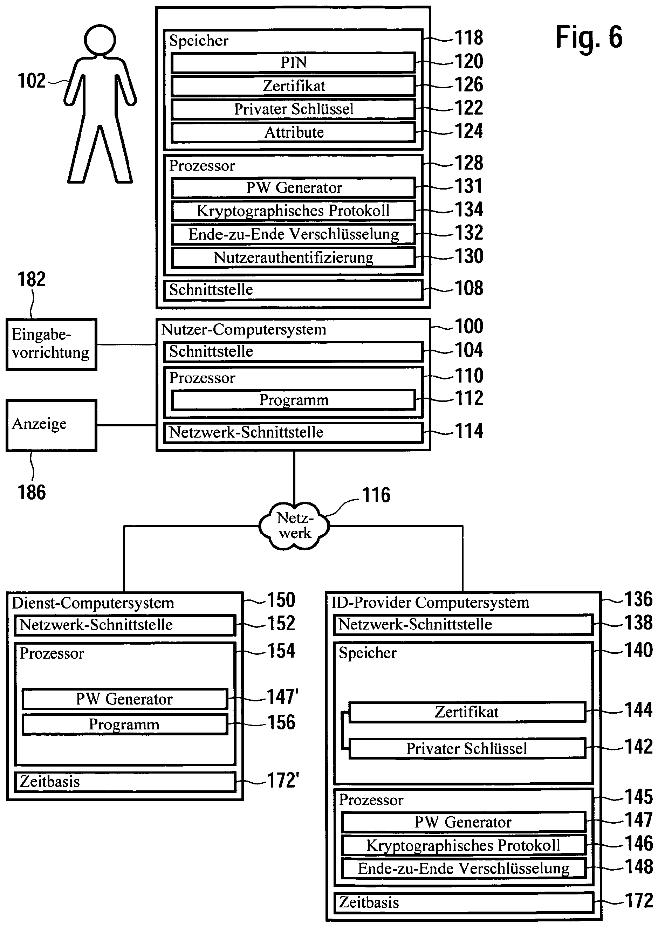

Zur Inanspruchnahme des von dem Dienst-Computersystem 150 zur Verfügung gestellten Dienstes wird wie folgt vorgegangen:
1. Authentifizierung des Nutzers 102 gegenüber dem ID-Token 106.
   Der Nutzer 102 authentifiziert sich gegenüber dem ID-Token 106. Bei einer Implementierung mit PIN gibt der Nutzer 102 hierzu seine PIN beispielsweise über das Nutzer-Computersystem 100 oder einen daran angeschlossenen Chipkarten-Terminal ein. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.
2. Authentifizierung des ID-Provider-Computersystems 136 gegenüber dem ID-Token 106.
   Hierzu wird eine Verbindung zwischen dem ID-Token 106 und dem ID-Provider-Computersystem 136 über das Nutzer-Computersystem 100 und das Netzwerk 116 hergestellt. Beispielsweise überträgt das ID-Provider-Computersystem 136 sein Zertifikat 144 über diese Verbindung an den ID-Token 106. Durch die Programminstruktionen 134 wird dann eine so genannte Challenge generiert, d.h. beispielsweise eine Zufallszahl. Diese Zufallszahl wird mit dem in dem Zertifikat 144 beinhalteten öffentlichen Schlüssel des ID-Provider-Computersystems 136 verschlüsselt. Das resultierende Chiffrat wird von dem ID-Token 106 über die Verbindung an das ID-Provider-Computersystem 136 gesendet. Das ID-Provider-Computersystem 136 entschlüsselt das Chiffrat mit Hilfe seines privaten Schlüssels 142 und erhält so die Zufallszahl. Die Zufallszahl sendet das ID-Provider-Computersystem 136 über die Verbindung an den ID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem ID-Token 106 authentifiziert. Die Zufallszahl kann als symmetrischer Schlüssel für die Ende-zu-Ende Verschlüsselung verwendet werden.
3. Erzeugung des Passworts
   Durch Ausführung der Programminstruktionen 147 greift das ID-Provider-Computersystem 136 auf seine Zeitbasis 172 zu, um von dort die aktuelle Zeitangabe abzufragen. Diese Zeitangabe wird vorzugsweise durch Ausführung der Programminstruktionen 146 mit Hilfe des privaten Schlüssels 142 und mit Hilfe des Zertifikats 144 digital von dem ID-Provider-Computersystem 136 signiert und über die zwischen dem ID-Token 106 und dem ID-Provider-Computersystem 136 bestehende Verbindung übertragen. Ferner wird durch Ausführung der Programminstruktionen 147 aus der aktuellen Zeitangabe das dazugehörige Passwort 174 generiert und zum Beispiel in dem Speicher 140 des ID-Provider-Computersystems 136 gespeichert.
   Der ID-Token 106 empfängt die signierte Zeitangabe von dem ID-Provider-Computersystem 136 über die Verbindung mit seiner Schnittstelle 108. Durch Ausführung der Programminstruktionen 134 wird die Gültigkeit der Signatur der Zeitangabe überprüft. Wenn die Signatur valide ist, wird durch Ausführung der Programminstruktionen 131 aus der Zeitangabe ein Passwort generiert. Das Passwort wird dann an das ID-Provider-Computersystem 136 übertragen. Durch Ausführung der Programminstruktionen 147 prüft dann das ID-Provider-Computersystem 136, ob das empfangene Passwort mit dem in dem Speicher 140 gespeicherten Passwort 174 übereinstimmt. Wenn dies nicht der Fall ist, so bricht der Ablauf an dieser Stelle ab.
   Das Passwort kann von dem ID-Token 106 auf verschiedenen Wegen an das ID-Provider-Computersystem 136 übertragen werden. Beispielsweise wird das Passwort automatisch über die zwischen dem ID-Token 106 und dem ID-Provider-Computersystem 136 bestehende Verbindung übertragen. Alternativ wird das Passwort von dem ID-Token 106 ausgegeben, wie zum Beispiel an das Nutzer-Computersystem 100 oder unmittelbar an den Nutzer 102, sodass das Passwort auf eine andere Art und Weise an das ID-Provider-Computersystem 136 übermittelt werden kann (vgl. hierzu auch die Ausführungsformen der Figuren 5 und 6).
   Alternativ oder zusätzlich wird das Passwort an das Dienst-Computersystem 150 übertragen, sodass das Dienst-Computersystem 150 das Passwort verifizieren kann. Eine Überprüfung des Passworts durch das Dienst-Computersystem 150 kann beispielsweise so erfolgen, dass das Dienst-Computersystem 150 nach dem Empfang des Passworts die aktuelle Zeit von seiner Zeitbasis 172' abfragt und mit Hilfe der aktuellen Zeitangabe durch Ausführung der Programminstruktionen 147' ein Passwort generiert, welches dem Passwort 174 gleicht, wenn seit der Abfrage der Zeitbasis 172 durch das ID-Provider-Computersystem 136 noch nicht das vorgegebene Zeitintervall einer Länge von zum Beispiel 5 - 15 Sekunden verstrichen ist.
4. Nachdem sich der Nutzer 102 erfolgreich gegenüber dem ID-Token 106 authentifiziert hat, nachdem sich das ID-Provider-Computersystem 136 erfolgreich gegenüber dem ID-Token 106 authentifiziert hat und vorzugsweise nachdem das Passwort von dem ID-Provider-Computersystem 136 verifiziert worden ist, erhält das ID-Provider-Computersystem 136 eine Leseberechtigung zum Auslesen, eines, mehrerer oder aller der in dem geschützten Speicherbereich 124 gespeicherten Attribute. Aufgrund eines entsprechenden Lesekommandos, welches das ID-Provider-Computersystem 136 über die Verbindung an den ID-Token 106 sendet, werden die angeforderten Attribute aus dem geschützten Speicherbereich 124 ausgelesen und durch Ausführung der Programminstruktionen 132 verschlüsselt. Die verschlüsselten Attribute werden über die Verbindung an das ID-Provider-Computersystem 136 übertragen und dort durch Ausführung der Programminstruktionen 148 entschlüsselt. Dadurch erhält das ID-Provider-Computersystem 136 Kenntnis der aus dem ID-Token 106 ausgelesenen Attribute.

Diese Attribute werden von dem ID-Provider-Computersystem mit Hilfe seines Zertifikats 144 signiert und über das Nutzer-Computersystem 100 oder direkt an das Dienst-Computersystem 150 übertragen. Dadurch wird das Dienst-Computersystem 150 über die aus dem ID-Token 106 ausgelesenen Attribute in Kenntnis gesetzt, sodass das Dienst-Computersystem 150 diese Attribute anhand der vorgegebenen ein oder mehreren Kriterien prüfen kann, um danach ggf. den von dem Benutzer 102 angeforderten Dienst zu erbringen.

Durch die Notwendigkeit der Authentifizierung des Nutzers 102 gegenüber dem ID-Token 106 und der Authentifizierung des ID-Provider-Computersystems 136 gegenüber dem ID-Token 106 ist der notwendige Vertrauensanker geschaffen, sodass das Dienst-Computersystem 150 sicher sein kann, dass die ihm von dem ID-Provider-Computersystem 136 mitgeteilten Attribute des Nutzers 102 zutreffend und nicht verfälscht sind.

Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend das ID-Provider-Computersystem 136. Es ist aber grundsätzlich auch möglich, dass sich zunächst das ID-Provider-Computersystem 136 gegenüber dem ID-Token 106 authentifizieren muss und erst nachfolgend der Nutzer 102.

In dem ersten Fall ist der ID-Token 106 beispielsweise so ausgebildet, dass er nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des ID-Provider-Computersystems 136.

Im zweiten Fall ist ein Start der Programminstruktionen 132 und 134 auch bereits möglich, wenn sich der Nutzer 102 noch nicht gegenüber dem ID-Token 106 authentifiziert hat. In diesem Fall sind beispielsweise die Programminstruktionen 134 so ausgebildet, dass das ID-Provider-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist.

Von besonderem Vorteil ist die Nutzbarmachung des ID-Tokens 106 für zum Beispiel E-Commerce und E-Government-Anwendungen, und zwar medienbruchfrei und rechtssicher aufgrund des durch die Notwendigkeit der Authentifizierung des Nutzers 102 und des ID-Provider-Computersystems 136 gegenüber dem ID-Token 106 gebildeten Vertrauensankers. Von besonderem Vorteil ist ferner, dass eine zentrale Speicherung der Attribute verschiedener Nutzer 102 nicht erforderlich ist, sodass die im Stand der Technik bestehenden Datenschutzprobleme hiermit gelöst sind. Was die Bequemlichkeit der Anwendung des Verfahrens betrifft, ist von besonderem Vorteil, dass eine vorherige Registrierung des Nutzers 102 zur Inanspruchnahme des ID-Provider-Computersystems 136 nicht erforderlich ist.

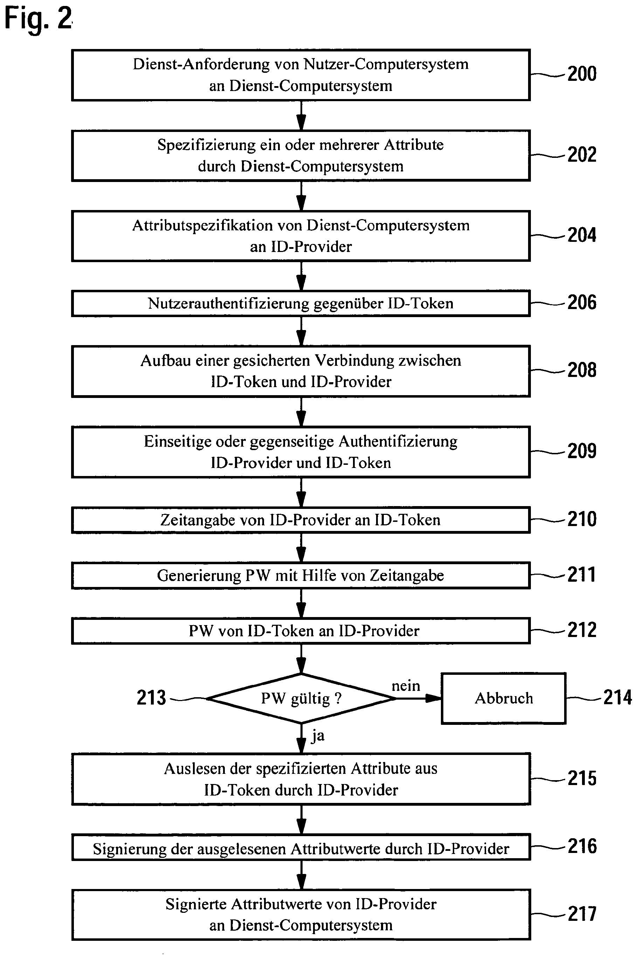

Die Figur 2 zeigt eine Ausführungsform eines erfindungsgemäßen Verfahrens. In dem Schritt 200 wird eine Dienst-Anforderung von dem Nutzer-Computersystem an das Dienst-Computersystem gesendet. Beispielsweise startet der Nutzer hierzu einen Internet-Browser des Nutzer-Computersystems und gibt eine URL zum Aufruf einer Webseite des Dienst-Computersystems ein. In die aufgerufene Webseite gibt der Nutzer dann seine Dienst-Anforderung ein, zum Beispiel zur Bestellung oder Auftragserteilung für einen Dienst oder ein Produkt.

In dem Schritt 202 spezifiziert das Dienst-Computersystem 150 daraufhin ein oder mehrere Attribute, welche es benötigt, um die Berechtigung des Nutzers für die Dienst-Anforderung zu prüfen. Insbesondere kann das Dienst-Computersystem solche Attribute spezifizieren, welche die digitale Identität des Nutzers 102 bestimmen. Diese Spezifizierung der Attribute durch das Dienst-Computersystem 150 kann fest vorgegeben sein oder je nach der Dienst-Anforderung im Einzelfall durch das Dienst-Computersystem 150 anhand vorgegebener Regeln bestimmt werden.

In dem Schritt 204 wird die Attributspezifikation, d.h. die in dem Schritt 202 erfolgte Spezifizierung der ein oder mehreren der Attribute, von dem Dienst-Computersystem an das ID-Provider-Computersystem übertragen, und zwar entweder direkt oder über das Nutzer-Computersystem.

Um dem ID-Provider-Computersystem die Möglichkeit zu geben, Attribute aus seinem ID-Token auszulesen, authentifiziert sich der Nutzer in dem Schritt 206 gegenüber dem ID-Token.

In dem Schritt 208 wird eine Verbindung zwischen dem ID-Token und dem ID-Provider-Computersystem aufgebaut. Hierbei handelt es sich vorzugsweise um eine gesicherte Verbindung, beispielsweise nach einem so genannten Secure Messaging-Verfahren.

In dem Schritt 209 erfolgt zumindest eine Authentifizierung des ID-Provider-Computersystems gegenüber dem ID-Token über die in dem Schritt 208 aufgebaute Verbindung. Zusätzlich kann eine Authentifizierung auch des ID-Tokens gegenüber dem ID-Provider-Computersystem vorgesehen sein.

In dem Schritt 210 überträgt der ID-Provider an den ID-Token über die in dem Schritt 208 aufgebaute Verbindung eine Zeitangabe. Vorzugsweise signiert der ID-Provider die Zeitangabe vor der Übertragung an den ID-Token. Mit Hilfe der Zeitangabe generiert der ID-Provider ferner ein Passwort.

In dem Schritt 211 generiert der ID-Token mit Hilfe der von dem ID-Provider empfangenen Zeitangabe ebenfalls ein Passwort. Vorzugsweise wird von dem ID-Token ferner die Validität der Signatur der Zeitangabe überprüft.

In dem Schritt 212 wird dann das Passwort von dem ID-Token an den ID-Provider 212 übertragen. In dem Schritt 213 prüft dann der ID-Provider die Gültigkeit des Passworts, d.h. ob das von dem ID-Token in dem Schritt 212 empfangene Passwort mit dem in dem Schritt 210 generierten Passwort übereinstimmt. Ist dies nicht der Fall, so wird der Ablauf in dem Schritt 214 abgebrochen. Ist das Gegenteil der Fall, so wird danach der Schritt 215 ausgeführt.

Nachdem sowohl der Nutzer als auch das ID-Provider-Computersystem erfolgreich gegenüber dem ID-Token authentifiziert worden sind, erhält nämlich das ID-Provider-Computersystem von dem ID-Token die Zugriffsberechtigung zum Auslesen der Attribute. In dem Schritt 215 sendet das ID-Provider-Computersystem ein oder mehrere Lesekommandos zum Auslesen der gemäß Attributspezifikation erforderlichen Attribute aus dem ID-Token. Die Attribute werden dann mittels Ende-zu-Ende-Verschlüsselung über die gesicherte Verbindung an das ID-Provider-Computersystem übertragen und dort entschlüsselt.

Die ausgelesenen Attributwerte werden in dem Schritt 216 von dem ID-Provider-Computersystem signiert. In dem Schritt 217 sendet das ID-Provider-Computersystem die signierten Attributwerte über das Netzwerk. Die signierten Attributwerte erreichen das Dienst-Computersystem entweder direkt oder über das Nutzer-Computersystem. Im letzteren Fall kann der Nutzer die Möglichkeit haben, die signierten Attributwerte zur Kenntnis zu nehmen und/oder durch weitere Daten zu ergänzen. Es kann vorgesehen sein, dass die signierten Attributwerte gegebenenfalls mit den ergänzten Daten erst nach Freigabe durch den Nutzer von dem Nutzer-Computersystem an das Dienst-Computersystem weitergeleitet werden. Hierdurch ist größtmögliche Transparenz für den Nutzer hinsichtlich der von dem ID-Provider-Computersystem an das Dienst-Computersystem gesendeten Attribute hergestellt.

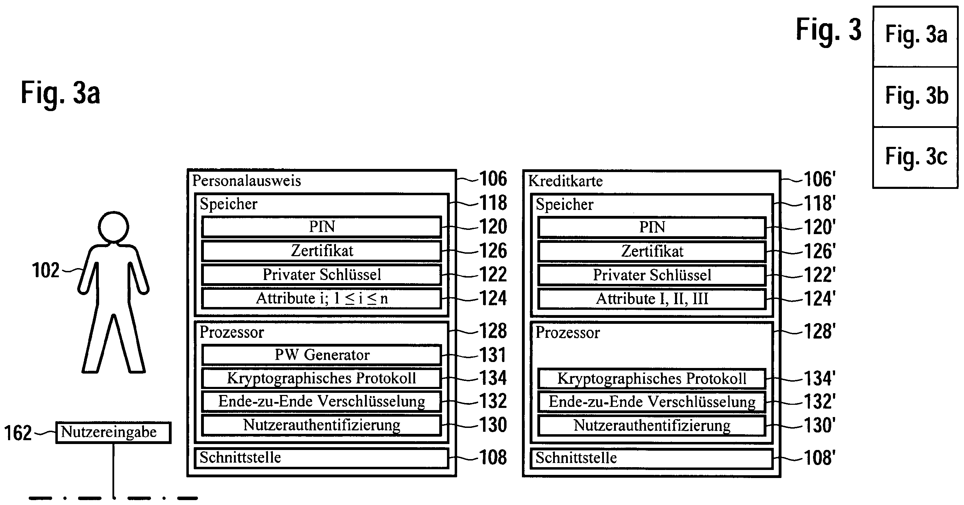

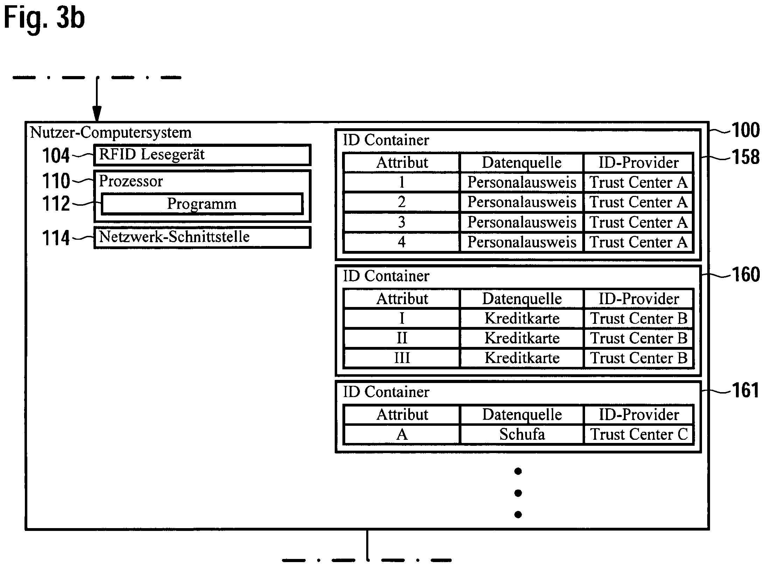

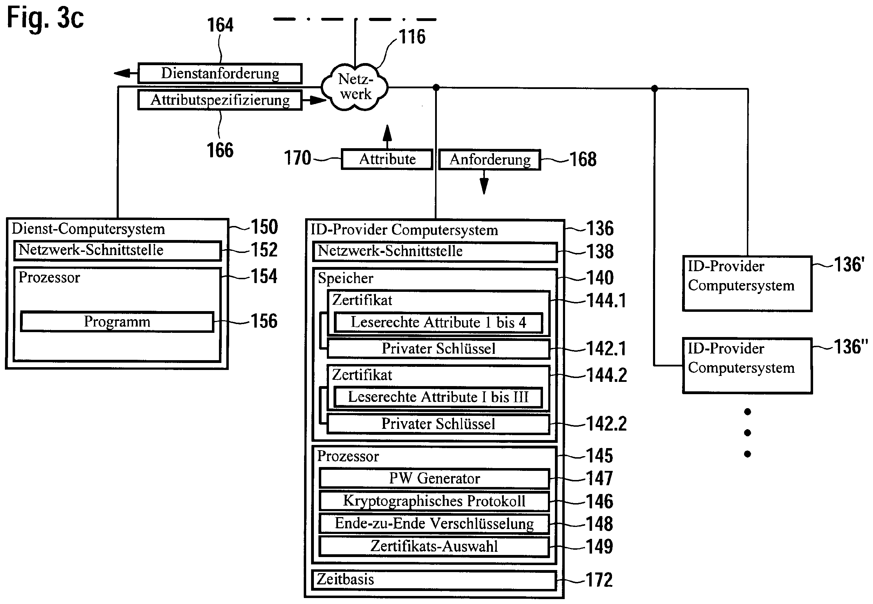

Die Figur 3 zeigt weitere Ausführungsformen eines erfindungsgemäßen ID-Tokens und erfindungsgemäße Computersysteme. Bei der Ausführungsform der Figur 3 ist der ID-Token 106 als Dokument ausgebildet, wie zum Beispiel als papier- und/oder kunststoffbasiertes Dokument mit einem integrierten elektronischen Schaltkreis, durch den die Schnittstelle 108, der Speicher 118 und der Prozessor 128 gebildet werden. Bei dem integrierten elektronischen Schaltkreis kann es sich beispielsweise um ein so genanntes Funketikett handeln, welches auch als RFID-Tag oder RFID-Label bezeichnet wird. Die Schnittstelle 108 kann aber auch kontaktbehaftet oder als so genanntes Dual Mode Interface ausgebildet sein.

Insbesondere kann es sich bei dem Dokument 106 um ein Wert- oder Sicherheitsdokument handeln, wie zum Beispiel um ein maschinenlesbares Reisedokument (MRTD), wie zum Beispiel einen elektronischen Reisepass oder einen elektronischen Personalausweis, oder um ein Zahlungsmittel, wie zum Beispiel eine Kreditkarte.

In dem geschützten Speicherbereich 124 sind bei der hier betrachteten Ausführungsform die Attribute i gespeichert, wobei 1 ≤ i ≤ n ist. Im Weiteren wird ohne Beschränktheit der Allgemeinheit davon ausgegangen, dass es sich bei dem in der Figur 3 exemplarisch gezeigten ID-Token 106 um einen elektronischen Personalausweis handelt. Beispielsweise handelt es sich bei dem Attribut i = 1 um den Namen, bei dem Attribut i = 2 um den Vornamen, bei dem Attribut i = 3 um die Adresse und bei dem Attribut i = 4 um das Geburtsdatum, etc.

Die Schnittstelle 104 des Nutzer-Computersystems 100 kann bei der hier betrachteten Ausführungsform als RFID-Lesegerät ausgebildet sein, welches einen integralen Bestandteil des Nutzer-Computersystems bilden kann oder als separate Komponente an dieses angeschlossen sein kann.

Der Nutzer 102 verfügt über einen oder mehrere weitere ID-Token, die prinzipiell gleich aufgebaut sind, wie z.B. einen ID-Token 106', bei dem es sich um eine Kreditkarte handelt.

In dem Nutzer-Computersystem 100 können mehrere Konfigurationsdatensätze 158, 160,... gespeichert sein. Jeder der Konfigurationsdatensätze gibt für eine bestimmte Attributmenge eine Datenquelle und ein ID-Provider-Computersystem an, welches die spezifizierte Datenquelle lesen kann. Bei dieser Ausführungsform kann das Nutzer-Computersystem 100 über das Netzwerk 116 verschiedene ID-Provider-Computersysteme 136, 136', ... ansprechen, die jeweils zu verschiedenen so genannten Trust-Centern gehören können. Beispielsweise gehört das ID-Provider-Computersystem 136 zu dem Trust-Center A und das im Prinzip gleich strukturierte ID-Provider-Computersystem 136' zu einem anderen Trust-Center B.

In dem Konfigurationsdatensatz 158, der auch als ID-Container bezeichnet wird, ist die Attributmenge der Attribute i = 1 bis i = 4 definiert. Diesen Attributen ist jeweils die Datenquelle "Personalausweis", d.h. der ID-Token 106 zugeordnet, sowie das Trust-Center A, d.h. das ID-Provider-Computersystem 136. Dieses kann beispielsweise in Form seiner URL in dem Konfigurationsdatensatz 158 spezifiziert sein.

In dem Konfigurationsdatensatz 116 ist dagegen eine Attributmenge I, II und III definiert. Als Datenquelle für diese Attribute ist jeweils die Kreditkarte, d.h. der ID-Token 106', angegeben. Der ID-Token 106' hat einen geschützten Speicherbereich 124', in dem die Attribute I, II, III, ... gespeichert sind. Bei dem Attribut I kann es sich zum Beispiel um den Namen des Inhabers der Kreditkarte, bei dem Attribut II um die Kreditkartennummer und bei dem Attribut III um die Gültigkeitsdauer der Kreditkarte handeln, etc.

Als ID-Provider-Computersystem ist in dem Konfigurationsdatensatz 160 das ID-Provider-Computersystem 136' des Trust-Centers B angegeben.

Alternativ zu der in der Figur 3 gezeigten Ausführungsform können in demselben Konfigurationsdatensatz für verschiedene Attribute auch verschiedene Datenquellen und/oder verschiedene ID-Provider-Computersysteme angegeben sein.

In der Ausführungsform der Figur 3 kann jedes der ID-Provider-Computersysteme 136, 136',... jeweils mehrere Zertifikate haben.

Beispielsweise sind in dem Speicher 140 des ID-Provider-Computersystems 136, der in der Figur 3 exemplarisch gezeigt ist, mehrere Zertifikate, wie zum Beispiel die Zertifikate 144.1 und 144.2 mit den jeweils zugeordneten privaten Schlüsseln 142.1 und 142.2 gespeichert. In dem Zertifikat 144.1 sind Leserechte des ID-Provider-Computersystems 136 auf die Attribute i = 1 bis i = 4 definiert, wohingegen in dem Zertifikat 144.2 Leserechte auf die Attribute I bis III definiert sind.

Zur Inanspruchnahme eines von dem Dienst-Computersystem 150 angebotenen Dienstes tätigt der Nutzer 102 zunächst eine Nutzereingabe 162 in das Nutzer-Computersystem 100, um beispielsweise in eine Webseite des Dienst-Computersystems 150 seine Anforderung für den gewünschten Dienst einzugeben. Diese Dienst-Anforderung 164 wird von dem Nutzer-Computersystem 100 über das Netzwerk 116 an das Dienst-Computersystem 150 übertragen. Das Dienst-Computersystem 150 antwortet darauf mit einer Attributspezifizierung 166, d.h. mit einer Spezifizierung derjenigen Attribute, welche das Dienst-Computersystem 150 zur Bearbeitung der Dienst-Anforderung 164 von dem Nutzer 102 benötigt. Die Attributspezifizierung kann beispielsweise in Form der Attributnamen erfolgen, wie zum Beispiel "Name", "Vorname", "Adresse", "Kreditkartennummer".

Der Empfang der Attributspezifizierung 166 wird dem Nutzer 102 durch das Nutzer-Computersystem 100 signalisiert. Der Nutzer 102 kann daraufhin einen oder erforderlichenfalls mehrere der Konfigurationsdatensätze 158, 160, ... auswählen, die jeweils Attributmengen definieren, welche die Attribute gemäß der Attributspezifizierung 166 zumindest als Teilmenge beinhalten.

Verlangt der Attributspezifizierung 166 beispielsweise lediglich die Mitteilung des Namens, des Vornamens und der Adresse des Nutzers 102, so kann der Nutzer 102 den Konfigurationsdatensatz 158 auswählen. Wird dagegen zusätzlich in der Attributspezifizierung 166 die Kreditkartennummer spezifiziert, so kann der Nutzer 102 zusätzlich den Konfigurationsdatensatz 160 auswählen. Dieser Vorgang kann auch vollautomatisch durch das Nutzer-Computersystem 100, beispielsweise durch Ausführung der Programminstruktionen 112, durchgeführt werden.

Im Weiteren wird zunächst davon ausgegangen, dass nur eine der Konfigurationsdatensätze, wie zum Beispiel der Konfigurationsdatensatz 158, aufgrund der Attributspezifizierung 166 ausgewählt wird.

Das Nutzer-Computersystem 100 sendet daraufhin eine Anforderung 168 an das oder die in dem gewählten Konfigurationsdatensatz angegebene ID-Provider-Computersysteme, in dem betrachteten Beispiel an das ID-Provider-Computersystem 136 des Trust-Centers A. Diese Anforderung 168 beinhaltet eine Angabe der von dem ID-Provider-Computersystem 136 aus der in dem Konfigurationsdatensatz 158 angegebenen Datenquelle auszulesenden Attribute gemäß der Attributspezifizierung 166.

Das ID-Provider-Computersystem 136 wählt daraufhin eines oder mehrerer seiner Zertifikate aus, welche die zum Lesen dieser Attribute erforderlichen Leserechte aufweisen. Wenn beispielsweise die Attribute i = 1 bis 3 aus dem Personalausweis gelesen werden sollen, so wählt das ID-Provider-Computersystem 136 sein Zertifikat 144.1 aus, welches die dafür erforderlichen Leserechte definiert. Diese Auswahl des Zertifikats wird durch Ausführung der Programminstruktionen 149 durchgeführt.

Daraufhin wird die Ausführung des kryptographischen Protokolls gestartet. Beispielsweise sendet das ID-Provider-Computersystem 136 hierzu eine Antwort an das Nutzer-Computersystem 100. Das Nutzer-Computersystem 100 fordert daraufhin den Nutzer 102 zu seiner Authentifizierung gegenüber der spezifizierten Datenquelle, d.h. hier gegenüber dem Personalausweis, auf.

Der Nutzer 102 bringt daraufhin seinen Personalausweis, d.h. den ID-Token 106, in den Bereich des RFID-Lesegeräts 104, und gibt beispielsweise seine PIN zu seiner Authentifizierung ein. Durch die erfolgreiche Authentifizierung des Nutzers 102 gegenüber dem ID-Token 106 wird dieser für die Durchführung des kryptographischen Protokolls, d.h. für die Durchführung der Programminstruktionen 134 freigeschaltet. Im Weiteren authentifiziert sich das ID-Provider-Computersystem 136 gegenüber dem ID-Token 106 mit Hilfe des ausgewählten Zertifikats 144.1, beispielsweise mit Hilfe eines Challenge-Response-Verfahrens. Diese Authentifizierung kann auch gegenseitig sein. Nach erfolgreicher Authentifizierung des ID-Provider-Computersystems 136 gegenüber dem ID-Token 106 sendet das ID-Provider-Computersystem 136 die aktuelle Zeitangabe an den ID-Token 106 und verifiziert danach das von dem ID-Token empfangene Passwort (vgl. die Ausführungsform der Fig. 1 und 2).

Dann richtet das ID-Provider-Computersystem eine Leseanforderung zum Lesen der erforderlichen Attribute an das Nutzer-Computersystem 100, welche dieses über das RFID-Lesegerät 104 an den ID-Token 106 weiterleitet. Der ID-Token 106 prüft anhand des Zertifikats 144.1, ob das ID-Provider-Computersystem 136 die dafür erforderlichen Leserechte hat. Wenn dies der Fall ist, werden die gewünschten Attribute aus dem geschützten Speicherbereich 124 ausgelesen und mittels Ende-zu-Ende-Verschlüsselung an das ID-Provider-Computersystem über das Nutzer-Computersystem 100 übertragen.

Das ID-Provider-Computersystem 136 sendet dann eine Antwort 170, die die ausgelesenen Attribute beinhaltet, über das Netzwerk 116 an das Dienst-Computersystem 150. Die Antwort 170 ist mit dem Zertifikat 144.1 digital signiert.

Alternativ sendet das ID-Provider-Computersystem 136 die Antwort 170 an das Nutzer-Computersystem 100. Der Nutzer 102 erhält daraufhin die Möglichkeit, die in der Antwort 170 beinhalteten Attribute zu lesen und zu entscheiden, ob er diese Attribute wirklich an das Dienst-Computersystem 150 weiterleiten möchte oder nicht.

Erst nach Eingabe eines Freigabekommandos des Nutzers 102 in das Nutzer-Computersystem 100 wird dann die Antwort 170 an das Dienst-Computersystem 150 weitergeleitet. Bei dieser Ausführungsform ist es ferner möglich, dass der Nutzer 102 die Antwort 170 um weitere Daten ergänzt.

Wenn mehrere ID-Provider-Computersysteme 136, 136', ... involviert sind, so können die einzelnen Antworten der ID-Provider-Computersysteme durch das Nutzer-Computersystem 100 in einer einzigen Antwort, die sämtliche der Attribute gemäß Attributspezifizierung 166 beinhalten, zusammengefasst werden, welche dann von dem Nutzer-Computersystem 100 an das Dienst-Computersystem 150 gesendet wird.

Nach einer Ausführungsform der Erfindung kann der Nutzer 102 anlässlich der Dienstanforderung 164 ein oder mehrerer seiner Attribute gegenüber dem Dienst-Computersystem 150 offenbaren, beispielsweise indem diese Attribute des Nutzers als Teil der Dienstanforderung 164 über das Netzwerk 116 an das Dienst-Computersystem übertragen werden. Insbesondere kann der Nutzer 102 diese Attribute in die Webseite des Dienst-Computersystems 150 eingeben. Die Richtigkeit dieser Attribute wird dann durch die Antwort 170 bestätigt, d.h. das Dienst-Computersystem 150 kann die von dem Nutzer 102 empfangenen Attribute mit den von dem ID-Provider Computersystem 136 aus dem ID-Token 106 ausgelesenen Attribute vergleichen und auf Übereinstimmung prüfen.

Nach einer weiteren Ausführungsform der Erfindung kann auch zumindest ein weiteres Attribut in der Attributspezifizierung 166 angegeben sein, welches nicht auf einem der ID-Token des Nutzers 102 gespeichert ist, sondern von einer externen Datenquelle abfragbar ist. Hierbei kann es sich z.B. um ein Attribut betreffend die Kreditwürdigkeit des Nutzers 102 handeln. Das Nutzer-Computersystem 100 kann hierzu einen weiteren Konfigurationsdatensatz 161 beinhalten, welcher für das Attribut A - z.B. die Kreditwürdigkeit - die Angabe einer Datenquelle und eines ID-Provider Computersystems beinhaltet. Bei der Datenquelle kann es sich um eine Online Auskunftei, wie z.B. Schufa, Dun & Bradstreet oder dergleichen handeln. Als ID-Provider Computersystem ist beispielsweise ein Trust Center C angegeben, wie in der Ausführungsform der Fig. 3. Die Datenquelle kann sich hier in dem Trust Center C befinden.

Um das Attribut A abzufragen richtet also das Nutzer-Computersystem 100 eine entsprechende Anforderung (in der Fig. 3 nicht gezeigt) an das Trust Center C, d.h. das ID-Provider Computersystem 136". Dieses liefert daraufhin das Attribut A, welches das Nutzer-Computersystem 100 zusammen mit den weiteren Attributen, die aus dem oder den ID-Token des Nutzers 102 ausgelesen wurden, an das Dienst-Computersystem 150 weiterleitet.

Vorzugsweise erfolgt die Abfrage des Attributs A nachdem die die digitale Identität des Nutzer 102 betreffenden Attribute bereits aus einem der ID-Token des Nutzers 102 abgefragt worden sind, und beispielsweise als signierte Antwort 170 von dem Nutzer-Computersystem 100 empfangen worden sind. Die Abfrage des Attributs A durch das Nutzer-Computersystem 100 von dem ID-Provider Computersystem 136" beinhaltet dann die signierte Antwort 170, so dass das ID-Provider Computersystem 136" hinsichtlich der Identität des Nutzers 102 ein sichere Information hat.

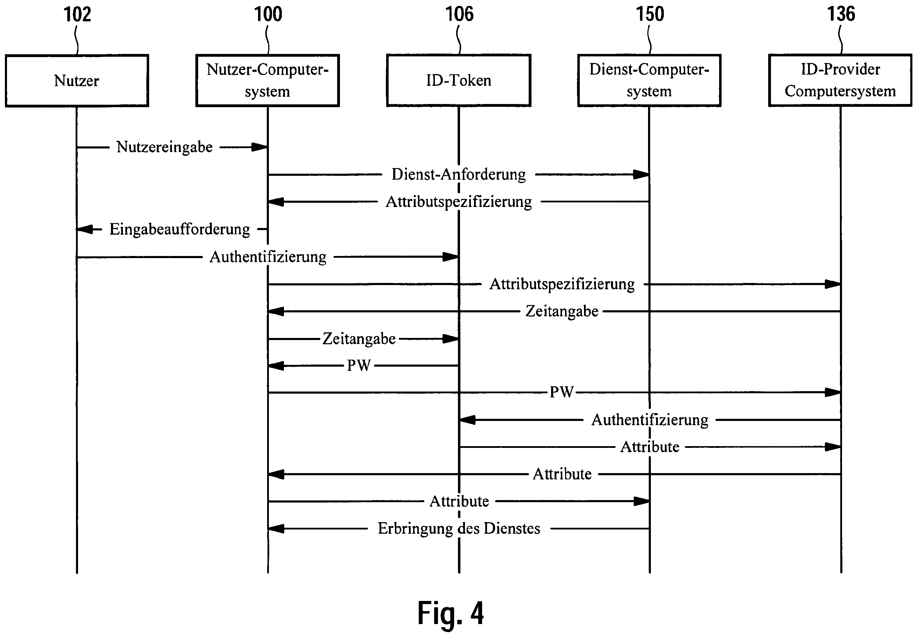

Die Figur 4 zeigt eine weitere Ausführungsform eines erfindungsgemäßen Verfahrens. Durch eine Nutzereingabe eines Nutzers 102 in ein Nutzer-Computersystem 100 spezifiziert der Nutzer 102 einen Dienst eines Dienst-Computersystems, welchen er oder sie in Anspruch nehmen möchte. Dies erfolgt beispielsweise durch Aufruf einer Internetseite des Dienst-Computersystems und einer Auswahl eines der dort angebotenen Dienste. Die Dienst-Anforderung des Nutzers 102 wird von dem Nutzer-Computersystem 100 an das Dienst-Computersystem 150 übertragen.

Das Dienst-Computersystem 150 antwortet auf die Dienst-Anforderung mit einer Attributspezifizierung, d.h. beispielsweise einer Liste von Attributnamen. Nach Empfang der Attributspezifizierung fordert das Nutzer-Computersystem 100 den Nutzer 102, beispielsweise durch eine Eingabeaufforderung, zur Authentifizierung gegenüber dem ID-Token 106 auf.

Der Nutzer 102 authentifiziert sich daraufhin gegenüber dem ID-Token 106, beispielsweise durch Eingabe seiner PIN. Nach erfolgreicher Authentifizierung wird die Attributspezifizierung von dem Nutzer-Computersystem 100 an ein ID-Provider-Computersystem 136 weitergeleitet. Dieses authentifiziert sich daraufhin gegenüber dem ID-Token 106.

Das ID-Provider-Computersystem 136 sendet dann eine Zeitangabe über das Nutzer-Computersystem 100 an den ID-Token 106. Der ID-Token 106 antwortet auf diese Zeitangabe mit einem Einmal-Passwort (PW), welches zum Beispiel über das Nutzer-Computersystem 100 an das ID-Provider-Computersystem 136 übertragen wird. Das ID-Provider-Computersystem 136 prüft dann die Validität des Passworts, indem es beispielsweise das von dem ID-Token 106 empfangene Passwort mit einem basierend auf der Zeitangabe durch das ID-Provider-Computersystem 106 generierten Passworts auf Übereinstimmung prüft.

Wenn das Passwort erfolgreich verifiziert worden ist, richtet das ID-Provider-Computersystem dann eine Leseanforderung zum Lesen der Attribute gemäß der Attributspezifizierung an den ID-Token 106.

Unter der Voraussetzung der vorherigen erfolgreichen Authentifizierung des Nutzers 102 und des ID-Provider-Computersystems 136 antwortet der ID-Token 106 auf die Leseanforderung mit den gewünschten Attributen. Das ID-Provider-Computersystem 136 signiert die Attribute und sendet die signierten Attribute an das Nutzer-Computersystem 100. Nach Freigabe durch den Nutzer 102 werden die signierten Attribute dann an das Dienst-Computersystem 150 übertragen, welches dann ggf. den gewünschten Dienst erbringen kann.

Die Figur 5 zeigt eine weitere Ausführungsform des ID-Tokens 106. Der ID-Token 106 ist hier beispielsweise als kartenförmiges Dokument ausgebildet, wobei in den Dokumentenkörper eine Anzeigevorrichtung 176 integriert ist. Die Programminstruktionen 131 sind dazu ausgebildet, die Anzeigevorrichtung 176 zur Anzeige des Passworts anzusteuern. Der elektronische Speicher 118 hat bei dieser Ausführungsform ferner einen Speicherbereich 178 zur Speicherung des Passworts.

Der ID-Token 106 hat ferner einen Oszillator 180, der zum Beispiel ein Clocksignal für den Prozessor 128 liefert, und dadurch auch eine relative Zeitbasis zur Verfügung stellt. Beispielsweise kann der Prozessor 128 durch Zählen der von dem Oszillator 128 generierten Clockimpulse seit dem Zeitpunkt der Einkopplung von Energie über die Schnittstelle 108 zählen, sodass die gezählten Clocksignale ein Maß für die seit dem Beginn der Einkopplung der Energie in den ID-Token 106 vergangene Zeit darstellen, mithin also eine relative Zeitangabe.

Das Nutzer-Computersystem 100 kann eine Eingabevorrichtung 182 aufweisen, wie zum Beispiel eine Tastatur oder für eine Spracheingabe.

Bei der hier betrachteten Ausführungsform ist dem Nutzer 102 eine User-ID zugeordnet. Das ID-Provider-Computersystem 136 hat eine Datenbank 184, in der unter dieser User-ID das für diesen User zuletzt gültige Passwort 174 gespeichert ist (vgl. Figur 1).

Die Zeitbasis 172 bzw. 172' ist hier so ausgebildet, dass sie ständig eine aktuelle Zeitangabe ausgibt, also nicht nur innerhalb der vorbestimmten Intervalle.

Zur Inanspruchnahme des ID-Provider-Computersystems 136 bzw. des Dienst-Computersystems 150 kann hier wie folgt vorgegangen werden:

Zunächst wird der ID-Token 106 in den Bereich der Schnittstelle 104 des Nutzer-Computersystems 100 gebracht, sodass Energie in den ID-Token 106 eingekoppelt wird und der Oszillator 108 anschwingt. Nach der Authentisierung des Nutzers 102 gegenüber dem ID-Token 106 und der einseitigen oder gegenseitigen Authentifizierung des ID-Tokens 106 und des ID-Provider-Computersystems 136 sowie dem Aufbau der Verbindung mit Ende-zu-Ende-Verschlüsselung zwischen dem ID-Token 106 und dem ID-Provider-Computersystem 136 greift das ID-Provider-Computersystem 136 auf eine Zeitbasis 172 zu, um einen aktuellen Zeitwert zu ermitteln.

Dieser aktuelle Zeitwert wird signiert und über die Verbindung von dem ID-Provider-Computersystem 136 an den ID-Token 106 übertragen. Wenn eine Nutzung des ID-Provider-Computersystems 136 und/oder des Dienst-Computersystems 150 erfolgen soll, zum Beispiel aufgrund einer entsprechenden Anforderung des Nutzers 102, so wird von dem ID-Token 106 aus der von dem ID-Provider-Computersystem 136 empfangenen Zeitangabe und der seit dem Empfangszeitpunkt empfangenen Zeit, die basierend auf dem Oszillator 180 von dem Prozessor 128 ermittelt wird, eine aktuelle Zeitangabe generiert. Mit Hilfe dieser aktuellen Zeitangabe wird durch Ausführung der Programminstruktionen 131 ein Passwort erzeugt und in dem Speicherbereich 178 abgespeichert. Das Passwort wird ferner auf der Anzeigevorrichtung 176 angezeigt, sodass es der Nutzer 102 von dort ablesen und in die Eingabevorrichtung 182 eingeben kann. Die Anzeige des Passworts auf der Anzeigevorrichtung kann in einer verzerrten Darstellung erfolgen, die für eine maschinelle Erfassung mittels optical character recognition (OCR) ungeeignet ist, damit sichergestellt ist, dass eine Nutzerinteraktion stattfinden muss, um das Passwort zu übertragen. Das Passwort wird dann von dem Nutzer-Computersystem 100 an das ID-Provider-Computersystem 136 und/oder an das Dienst-Computersystem 150 übertragen, sodass es dort jeweils verifiziert werden kann.

Zur Verifikation des Passworts greift beispielsweise das ID-Provider-Computersystem 136 auf seine Zeitbasis 172 zu, um von dort eine aktuelle Zeitangabe zu erlangen, die auch Grundlage für die Generierung des Passworts seitens des ID-Tokens 106 gewesen ist. Mit Hilfe dieser Zeitangabe wird durch das ID-Provider-Computersystem 136 das Passwort generiert und mit dem empfangenen Passwort verglichen.

Es kann vorgesehen sein, dass das ID-Provider-Computersystem 136 mit seinem nachfolgenden Lesezugriff die User-ID als eines der Attribute aus dem Speicherbereich 124 aus liest und das Passwort unter der User-ID in der Datenbank 184 speichert.

Nach der Nutzung wird der ID-Token 106 von dem Nutzer-Computersystem 100 entfernt, sodass der Oszillator 180 aufhört zu schwingen. Das Passwort bleibt aber in dem Speicherbereich 178 gespeichert, da es sich um einen nicht-flüchtigen Speicher handelt.

Bei einer nachfolgenden Nutzung wird dieses Passwort zunächst aus dem Speicherbereich 178 ausgelesen und zu dem ID-Provider-Computersystem 136 übertragen. Das ID-Provider-Computersystem 136 kann dann zur weiteren Erhöhung der Sicherheit überprüfen, ob es sich bei diesem Passwort um das für den betreffenden User in der Datenbank 184 gespeicherte Passwort handelt.

Die Figur 6 zeigt eine weitere Ausführungsform, bei der das Nutzer-Computersystem 100 eine Anzeigevorrichtung 186 hat, wie zum Beispiel einen Computer-Monitor. Bei dieser Ausführungsform wird das durch Ausführung der Programminstruktionen 131 generierte Passwort über die Schnittstellen 108 und 104 von dem ID-Token 106 an das Nutzer-Computersystem 100 übertragen und auf der Anzeigevorrichtung 186 ausgegeben. Der Nutzer 102 kann das Passwort dann in die Eingabevorrichtung 182 eingeben, sodass das Passwort an das ID-Provider-Computersystem 136 und/oder an das Dienst-Computersystem 150 übertragen werden kann.

### Bezugszeichenliste

- 100: Nutzer-Computersystem
- 102: Nutzer
- 104: Schnittstelle
- 106: ID-Token
- 108: Schnittstelle
- 110: Prozessor
- 112: Programminstruktionen
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 132: Programminstruktionen
- 134: Programminstruktionen
- 136: I D-Provider-Computersystem
- 138: Netzwerk-Schnittstelle
- 140: Speicher
- 142: privater Schlüssel
- 144: Zertifikat
- 145: Prozessor
- 146: Programminstruktionen
- 147: Programminstruktionen
- 147': Programminstruktionen
- 148: Programminstruktionen
- 149: Programminstruktionen
- 150: Dienst-Computersystem
- 152: Netzwerk-Schnittstelle
- 154: Prozessor
- 156: Programminstruktionen
- 158: Konfigurationsdatensatz
- 160: Konfigurationsdatensatz
- 161: Konfigurationsdatensatz
- 162: Nutzereingabe
- 164: Dienst-Anforderung
- 166: Attributspezifizierung
- 168: Anforderung
- 170: Antwort
- 172: Zeitbasis
- 172': Zeitbasis
- 174: Passwort
- 176: Anzeigevorrichtung
- 178: Speicherbereich
- 180: Oszillator
- 182: Eingabevorrichtung
- 184: Datenbank
- 186: Anzeigevorrichtung

## Patentansprüche

1. Verfahren zum Lesen zumindest eines in einem ID-Token (106, 106') gespeicherten Attributs, wobei der ID-Token einem Nutzer (102) zugeordnet ist, mit folgenden Schritten:
- Authentifizierung des Nutzers gegenüber dem ID-Token,
- Authentifizierung eines ersten Computersystems (136) gegenüber dem ID-Token,
- nach erfolgreicher Authentifizierung des Nutzers und des ersten Computersystems gegenüber dem ID-Token, Übertragung einer Zeitangabe von dem ersten Computersystem an den ID-Token zur Generierung eines Passworts mit Hilfe der Zeitangabe durch den ID-Token, Lesezugriff des ersten Computersystems auf das zumindest eine in dem ID-Token gespeicherte Attribut zur Übertragung des zumindest einen Attributs nach dessen Signierung an ein zweites Computersystem (150), wobei das Passwort an das erste Computersystem übertragen wird und wobei das erste Computersystem das Passwort verifiziert und wobei die Übertragung des zumindest einen Attributs an das zweite Computersystem nur erfolgt, wenn die Verifizierung des Passworts erfolgreich war.

2. Verfahren nach Anspruch 1, wobei der Lesezugriff auf das zumindest eine Attribut nur erfolgt, wenn die Verifizierung des Passworts erfolgreich war.

3. Verfahren nach Anspruch 1, wobei das Passwort an das zweite Computersystem übertragen wird und wobei das zweite Computersystem das Passwort verifiziert.

4. Verfahren nach einem der vorhergehenden Ansprüche, wobei der ID-Token eine Anzeigevorrichtung aufweist, und wobei das Passwort auf der Anzeigevorrichtung angezeigt wird,
wobei das Passwort vorzugsweise in ein drittes Computersystem eingegeben und von dem dritten Computersystem an das erste und/oder das zweite Computersystem übertragen wird, und/oder
wobei das Passwort von dem ID-Token zu einem dritten Computersystem übertragen wird und auf einer Anzeigevorrichtung des dritten Computersystems angezeigt wird, und wobei das Passwort von dem dritten Computersystem an das erste und/oder das zweite Computersystem übertragen wird, und/oder
wobei der ID-Token eine Schnittstelle aufweist, über die der ID-Token von einem dritten Computersystem mit Energie versorgt wird,
wobei der ID-Token vorzugsweise einen Oszillator aufweist, der nur dann oszilliert, wenn der ID-Token über die Schnittstelle mit Energie versorgt wird, und wobei aus der Zeitangabe mit Hilfe des Oszillators eine aktuelle Zeitangabe gebildet wird, wobei das Passwort mit Hilfe der aktuellen Zeitangabe generiert wird,
wobei es sich bei dem Passwort vorzugsweise um ein Einmalpasswort handelt
wobei die Zeitangabe von vorzugsweise dem ersten Computersystem signiert ist,

5. Verfahren nach Anspruch 4, wobei das Passwort in dem ID-Token gespeichert wird und vor einem weiteren Lesezugriff des ersten Computersystems auf den ID-Token erneut an das erste Computersystem übertragen wird, und/oder
wobei die Authentifizierung des ersten Computersystems gegenüber dem ID-Token mit Hilfe eines Zertifikats (144) des ersten Computersystems erfolgt, wobei das Zertifikat eine Angabe derjenigen in dem ID-Token gespeicherten Attribute beinhaltet, für welche das erste Computersystem für den Lesezugriff berechtigt ist, und/oder
wobei der ID-Token die Leseberechtigung des ersten Computersystems für den Lesezugriff auf zumindest eines der Attribute mit Hilfe des Zertifikats überprüft, und/oder
mit folgenden weiteren Schritten:
- Signierung des zumindest einen aus dem ID-Token gelesenen Attributs durch das erste Computersystem,
- Übertragung des signierten Attributs von dem ersten Computersystem an ein zweites Computersystem, und/oder
mit folgenden weiteren Schritten:
- Senden einer Anforderung (164) von dem dritten Computersystem (100) an das zweite Computersystem,
- Spezifizierung eines oder mehrerer Attribute durch das zweite Computersystem,
- Senden der Attributspezifizierung (166) von dem zweiten Computersystem an das erste Computersystem,
wobei der Lesezugriff des ersten Computersystems erfolgt, um die in der Attributspezifizierung spezifizierten ein oder mehrere Attribute aus dem ID-Token auszulesen,
wobei die Anforderung (164) vorzugsweise einen Identifikator zur Identifizierung des ersten Computersystems durch das zweite Computersystem beinhaltet, und wobei die Übertragung der Attributspezifikation von dem zweiten Computersystem an das erste Computersystem ohne Zwischenschaltung des dritten Computersystems erfolgt.

6. Verfahren nach Anspruch 5, wobei das dritte Computersystem mehrere vordefinierte Konfigurationsdatensätze (158, 160,...) aufweist, wobei jeder der Konfigurationsdatensätze eine Teilmenge der Attribute, zumindest eine Datenquelle und ein erstes Computersystem aus einer Menge von ersten Computersystemen (136, 136',...) spezifiziert, wobei die Attributspezifikation von dem zweiten Computersystem zunächst an das dritte Computersystem übertragen wird, sodass mittels des dritten Computersystems zumindest einer der Konfigurationsdatensätze ausgewählt wird, der eine Teilmenge der Attribute spezifiziert, welche das zumindest eine in der Attributspezifikation spezifizierte Attribut beinhaltet, und wobei das dritte Computersystem die Attributspezifikation an das erste Computersystem weiterleitet, und wobei eine Verbindung zwischen dem ersten Computersystem und dem mit dem durch die Angabe der Datenquelle in dem ausgewählten Konfigurationsdatensatz spezifizierten ID-Token über das dritte Computersystem aufgebaut wird, und/oder
wobei das zumindest eine von dem ersten Computersystem aus dem ID-Token gelesene Attribut an das dritte Computersystem gesendet wird, von wo es nach Freigabe durch den Nutzer an das zweite Computersystem weitergeleitet wird, und/oder
wobei der Nutzer die Attribute vor der Weiterleitung an das zweite Computersystem durch weitere Daten ergänzen kann, und/oder
wobei das erste Computersystem mehrere der Zertifikate (144.1; 144.2) mit unterschiedlichen Leserechten aufweist, wobei das erste Computersystem aufgrund des Empfangs der Attributspezifizierung zumindest eines der Zertifikate auswählt, welches die zum Lesen der in der Attributspezifizierung spezifizierten Attribute ausreichenden Leserechte aufweist, und/oder
wobei das dritte Computersystem zumindest einen Konfigurationsdatensatz (161) hat, welcher eine externe Datenquelle zur Abfrage eines weiteren Attributs (A) von dem dritten Computersystem über das Netzwerk (116) spezifiziert,
wobei die Abfrage des weiteren Attributs vorzugsweise erfolgt, nachdem das zumindest eine Attribut aus dem ID-Token ausgelesen worden ist, und nachdem das dritte Computersystem das zumindest eine signierte Attribut von dem ersten Computersystem empfangen hat, wobei die Abfrage das zumindest eine signierte Attribut beinhaltet.

7. Computerprogrammprodukt mit von einem Computersystem ausführbaren Instruktionen zur Durchführung eines Verfahrens nach einem der vorhergehenden Ansprüche.

8. Computersystem mit
- Mitteln (138) zum Empfang einer Attributspezifizierung (166) über ein Netzwerk (116), wobei die Attributspezifikation zumindest ein Attribut spezifiziert,
- Mitteln (142, 144, 146) zur Authentifizierung gegenüber einem ID-Token (106),
- Mitteln zum Senden einer Zeitangabe an den ID-Token,
- Mitteln zum Lesen zumindest eines Attributs aus dem ID-Token über eine geschützte Verbindung,
wobei das Lesen des zumindest einen Attributs voraussetzt, dass sich ein dem ID-Token zugeordneter Nutzer und das Computersystem gegenüber dem ID-Token authentifiziert haben,
- mit Mitteln zum Empfang eines mit Hilfe der Zeitangabe generierten Passworts und Mitteln zur Prüfung der Gültigkeit des Passworts,
- mit Mitteln (144) zum Signieren des zumindest einen Attributs und Mitteln (138) Senden des zumindest einen signierten Attributs an ein zweites Computersystem nach Überprüfung des Passworts.

9. Computersystem nach Anspruch 8, mit Mitteln zur Generierung einer Anforderung an den Nutzer zur Authentifizierung gegenüber dem ID-Token aufgrund des Empfangs der Attributspezifikation,
wobei vorzugsweise die Mittel (138) zum Empfang der Attributspezifikation von dem zweiten Computersystem ausgebildet sind, und mit Mitteln (138) zum Senden des zumindest einen aus dem ID-Token gelesenen Attributs an ein drittes Computersystem (100) zur Weiterleitung an das zweite Computersystem, und vorzugsweise
mit Mitteln (144) zum Signieren der Zeitangabe, wobei die signierte Zeitangabe gesendet wird, und vorzugsweise
mit mehreren der Zertifikate (144.1; 144.2) unterschiedlicher Leserechte, wobei das Computersystem dazu ausgebildet ist, aufgrund des Empfangs der Attributspezifizierung zumindest eines der Zertifikate auszuwählen, welches die zum Lesen der in der Attributspezifizierung spezifizierten Attribute ausreichenden Leserechte aufweist.

## Claims

1. A method for reading at least one attribute stored in an ID token (106, 106'), a user (102) being associated with the ID token, comprising the following steps:
- the user authenticating himself or herself with respect to the ID token;
- a first computer system (136) authenticating itself with respect to the ID token;
- after successful authentication of the user and of the first computer system with respect to the ID token, transmitting a piece of time information from the first computer system to the ID token for the generation of a password by way of the piece of time information by the ID token, the first computer system receiving read access to the at least one attribute stored in the ID token for transmitting the at least one attribute, after the same has signed, to a second computer system (150), wherein the password is transmitted to the first computer system, and wherein the transmission of the at least one attribute to the second computer system only takes place if the verification of the password was successful.

2. The method according to claim 1, wherein the read access to the at least one attribute only takes place if the verification of the password was successful.

3. The method according to claim 1, wherein the password is transmitted to the second computer system, and the second computer system verifies the password.

4. The method according to any one of the preceding claims, wherein the ID token comprises a display device, and the password is displayed on the display device,
the password preferably being entered into a third computer system and transmitted from the third computer system to the first and/or second computer systems, and/or
the password being transmitted from the ID token to a third computer system and
displayed on a display device of the third computer system, and the password being transmitted from the third computer system to the first and/or second computer systems, and/or
the ID token comprising an interface via which the ID token is supplied with energy by a third computer system,
the ID token preferably comprising an oscillator, which only oscillates when the ID token is being supplied with energy via the interface, and a current piece of time information being formed from the piece of time information by way of the oscillator, the password being generated by way of the current piece of time information,
the password preferably being a one-time password, and
the piece of time information being signed by preferably the first computer system.

5. The method according to claim 4, the password being stored in the ID token, and, prior to further read access of the first computer system to the ID token, being again transmitted to the first computer system, and/or
the authentication of the first computer system with respect to the ID token taking place by way of a certificate (144) of the first computer system, the certificate containing information about those attributes stored in the ID token for which the first computer system has read access authorization, and/or
the ID token checking the read authorization of the first computer system for the read access to at least one of the attributes using the certificate, and/or
comprising the following further steps:
- the first computer system signing the at least one attribute that is read from the ID token;
- transmitting the signed attribute from the first computer system to a second computer system; and/or
comprising the following further steps:
- sending a request (164) from the third computer system (100) to the second computer system;
- the second computer system specifying one or more attributes;
- sending the attribute specification (166) from the second computer system to the first computer system;
the read access of the first computer system taking place so as to read out the one or more attributes specified in the attribute specification from the ID token;
the request (164) preferably comprising an identifier for the identification of the first computer system by the second computer system, and the transmission of the attribute specification from the second computer system to the first computer system taking place without interconnection of the third computer system.

6. The method according to claim 5, wherein the third computer system comprises a plurality of predefined configuration data sets (158, 160,...), each of the configuration data sets specifying a subset of the attributes, at least one data source and a first computer system from a set of first computer systems (136, 136',...) the attribute specification being initially transmitted from the second computer system to the third computer system, so that, by way of the third computer system, at least one of the configuration data sets is selected, which specifies a subset of the attributes which comprises the at least one attribute specified in the attribute specification, and the third computer system forwarding the attribute specification to the first computer system, and a link being established via the third computer system between the first computer system and the ID token specified by the information of the data source in the selected configuration data set; and/or
wherein the at least one attribute read by the first computer system from the ID token is sent to the third computer system, from where it is forwarded to the second computer system upon approval by the user; and/or
wherein the user is able to supplement the attributes with further data prior to these being forwarded to the second computer system; and/or
wherein the first computer system comprises a plurality of the certificates (144.1; 144.2) having differing read rights, the first computer system based on receipt of the attribute specification selecting at least one of the certificates, which includes the read rights sufficient for reading the attributes specified in the attribute specification, and/or
wherein the third computer system comprises at least one configuration data set (161), which specifies an external data source for the polling of a further attribute (A) by the third computer system via the network (116),
the polling of the further attribute preferably taking place after the at least one attribute has been read out from the ID token, and after the third computer system has received the at least one signed attribute from the first computer system, the poll including the at least one signed attribute.

7. A computer program product, comprising instructions executable by a computer system for carrying out a method according to any one of the preceding claims.

8. A computer system, comprising:
- means (138) for receiving an attribute specification (166) via a network (116), the attribute specification specifying at least one attribute;
- means (142, 144, 146) for authentication with respect to an ID token (106);
- means for sending a piece of time information to the ID token;
- means for reading at least one attribute from the ID token via a protected link,
the reading of the at least one attribute presupposing that a user associated with the ID token and the computer system having authenticated themselves with respect to the ID token,
- means for receiving a password generated by way of the piece of time information and means for testing the validity of the password, and
- means (144) for signing the at least one attribute and means (138) for sending the at least one signed attribute to a second computer system after the password has been checked.

9. The computer system according to claim 8,
comprising means for generating a request for the user to authenticate himself or herself with respect to the ID token based on receipt of the attribute specification;
the means (138) for receiving the attribute specification preferably being formed by the second computer system, and means (138) for sending the at least one attribute read out from the ID token to a third computer system (100) for forwarding to the second computer system, and preferably
means (144) for signing the piece of time information, the signed piece of time information being sent,
and preferably
comprising a plurality of the certificates (144.1, 144.2) having differing read rights, the computer system being designed, based on receipt of the attribute specification, to select at least one of the certificates, which includes the read rights sufficient for reading the attributes specified in the attribute specification.

## Revendications

1. Procédé de lecture d'au moins un attribut stocké dans un jeton d'identification (106, 106'), où le jeton d'identification est associé à un utilisateur (102), avec les étapes suivantes :
- authentification de l'utilisateur vis à vis du jeton d'identification,
- authentification d'un premier système informatique (136) vis à vis du jeton d'identification,
- après l'authentification réussie de l'utilisateur et du premier système informatique vis à vis du jeton d'identification, transmission d'une indication de l'heure du premier système informatique vers le jeton d'identification pour la génération d'un mot de passe à l'aide de l'indication de l'heure par le jeton d'identification, accès en lecture du premier système informatique à l'au moins un attribut stocké dans le jeton d'identification pour la transmission de l'au moins un attribut après sa signature vers un deuxième système informatique (150), où le mot de passe est transmis au premier système informatique et où le premier système informatique vérifie le mot de passe et où la transmission de l'au moins un attribut vers le deuxième système informatique n'a lieu que si la vérification du mot de passe a été couronnée de succès.

2. Procédé selon la revendication 1, dans lequel l'accès en lecture à l'au moins un attribut n'a lieu que si la vérification du mot de passe a été couronnée de succès.

3. Procédé selon la revendication 1, dans lequel le mot de passe est transmis au deuxième système informatique et où le deuxième système informatique vérifie le mot de passe.

4. Procédé selon l'une des revendications précédentes, dans lequel le jeton d'identification présente un dispositif d'affichage et où le mot de passe est indiqué sur le dispositif d'affichage,
où le mot de passe est de préférence entré dans un troisième système informatique et est transmis du troisième système informatique vers le premier et/ou de deuxième système informatique, et/ou
où le mot de passe est transmis du jeton d'identification vers un troisième système informatique et est indiqué sur un dispositif d'affichage du troisième système informatique, et où le mot de passe est transmis du troisième système informatique vers le premier et/ou le deuxième système informatique, et/ou
où le jeton d'identification présente une interface, par l'intermédiaire de laquelle le jeton d'identification est alimenté en énergie à partir d'un troisième système informatique,
où le jeton d'identification présente de préférence un oscillateur qui n'oscille que si le jeton d'identification est alimenté en énergie par l'intermédiaire de l'interface, et où une indication de l'heure actualisée est donnée à partir de l'indication de l'heure à l'aide de l'oscillateur, où le mot de passe est généré à l'aide de l'indication de l'heure actualisée,
où il s'agit de préférence d'un mot de passe à usage unique dans le cas du mot de passe
où l'indication de l'heure est signée de préférence par le premier système informatique.

5. Procédé selon la revendication 4, dans lequel le mot de passe est stocké dans le jeton d'identification et est transmis de nouveau avant un nouvel accès en lecture du premier système informatique du jeton d'identification vers le premier système informatique, et/ou
où l'authentification du premier système informatique vis-à-vis du jeton d'identification a lieu à l'aide d'un certificat (144) du premier système informatique, où le certificat contient une indication des attributs en question stockés dans le jeton d'identification pour lesquels le premier système informatique est autorisé pour l'accès en lecture, et/ou
où le jeton d'identification vérifie l'autorisation pour la lecture du premier système informatique pour l'accès en lecture à au moins un des attributs à l'aide du certificat, et/ou avec les autres étapes suivantes :
- signature de l'au moins un attribut lu à partir du jeton d'identification par le premier système informatique,
- transmission de l'attribut signé du premier système informatique vers le deuxième système informatique, et/ou
avec les autres étapes suivantes :
- envoi d'une commande (164) du troisième système informatique (100) vers le deuxième système informatique,
- spécification d'un ou de plusieurs attributs par le deuxième système informatique,
- envoi de la spécification d'attribut (166) du deuxième système informatique vers le premier système informatique,
où l'accès en lecture du premier système informatique a lieu pour préciser dans la spécification d'attribut de lire un ou plusieurs attributs à partir du jeton d'identification,
où la commande (164) contient de préférence un identificateur pour l'identification du premier système informatique par le deuxième système informatique, et où la transmission de la spécification d'attribut a lieu du deuxième système informatique vers le premier système informatique sans branchement intermédiaire du troisième système informatique.

6. Procédé selon la revendication 5, dans lequel le troisième système informatique présente plusieurs séries de données de configuration (158, 160, ...) prédéfinies, où chacune des séries de données de configuration précise une quantité partielle des attributs, au moins une source de données et un premier système informatique parmi une grande quantité de premiers systèmes informatiques (136, 136', ...), où la spécification d'attribut est transmise à partir du deuxième système informatique d'abord vers le troisième système informatique, de sorte qu'au moins une des séries de données de configuration, qui spécifie une quantité partielle des attributs, est choisie au moyen du troisième système informatique, laquelle contient l'au moins un attribut précisé dans la spécification d'attribut, et où le troisième système informatique fait suivre la spécification d'attribut vers le premier système informatique, et où une liaison est établie entre le premier système informatique et avec le jeton d'identification spécifié par l'indication de la source de données dans la série de données de configuration choisie par l'intermédiaire du troisième système informatique, et/ou
où l'au moins un attribut lu à partir du jeton d'identification par le premier système informatique est envoyé au troisième système informatique, d'où il est transmis après une libération par l'utilisateur vers le deuxième système informatique, et/ou
où l'utilisateur peut compléter les attributs par de nouvelles données avant la transmission vers le deuxième système informatique, et/ou
où le premier système informatique présente plusieurs parmi les certificats (144.1 ; 144.2) avec des droits de lecture différents, où le premier système informatique, en raison de la réception de la spécification d'attribut, choisit au moins l'un des certificats, lequel présente les droits de lecture suffisants pour la lecture des attributs spécifiés dans la spécification d'attribut, et/ou
où le troisième système informatique a au moins une série de données de configuration (161), laquelle précise une source de données pour la demande d'un nouvel attribut (A) du troisième système informatique par l'intermédiaire du réseau (116),
où la demande du nouvel attribut a lieu de préférence après que l'au moins un attribut ait été lu à partir du jeton d'identification, et après que le troisième système informatique ait reçu l'au moins un attribut signé du premier système informatique, où la demande contient l'au moins un attribut signé.

7. Produit de programme informatique avec des instructions exécutables par un système informatique pour l'exécution d'un procédé selon l'une des revendications précédentes.

8. Système informatique avec
- des moyens (138) pour la réception d'une spécification d'attribut (166) par le biais d'un réseau (116), où la spécification d'attribut précise au moins un attribut,
- des moyens (142, 144, 146) pour l'authentification vis-à-vis d'un jeton d'identification (106),
- des moyens pour l'envoi d'une indication de l'heure vers le jeton d'identification,
- des moyens de lecture d'au moins un attribut à partir du jeton d'identification par le biais d'une liaison sécurisée,
où la lecture de l'au moins un attribut suppose qu'un utilisateur associé au jeton d'identification et le système informatique se sont authentifiés vis à vis du jeton d'identification,
- avec des moyens pour la réception d'un mot de passe généré à l'aide de l'indication de l'heure et des moyens pour la vérification de la validité du mot de passe,
- avec des moyens (144) pour la signature de l'au moins un attribut et des moyens (138) pour l'envoi de l'au moins un attribut signé à un deuxième système informatique pour la vérification du mot de passe.

9. Système informatique selon la revendication 8, avec des moyens pour la génération d'une demande auprès de l'utilisateur pour l'authentification vis à vis du jeton d'identification, en raison de la réception de la spécification d'attribut,
où, de préférence, les moyens (138) pour la réception de la spécification d'attribut sont donnés par le deuxième système informatique, et avec des moyens (138) pour l'envoi de l'au moins un attribut lu à partir du jeton d'identification vers un troisième système informatique (100) pour la transmission au deuxième système informatique, et de préférence
des moyens (144) pour la signature de l'indication de l'heure, où l'indication de l'heure signée est envoyée, et de préférence
avec plusieurs des certificats (144.1 ; 144.2) des droits de lecture différents, où le système informatique est conçu, en raison de la réception de la spécification d'attribut, pour choisir au moins un des certificats, lequel présente les droits de lecture suffisants pour la lecture des attributs précisés dans la spécification d'attribut.
